# EUROPÄISCHE PATENTSCHRIFT

(11) **EP 4 153 333 B1**
(45) Veröffentlichungstag und Bekanntmachung des Hinweises auf die Patenterteilung: **17.09.2025**
(21) Anmeldenummer: 21730483.1
(22) Anmeldetag: 19.05.2021
(51) Int. Cl.: B62B 13/16, B62B 17/06, B62B 13/10, A63C 5/16, A63C 5/06, A63C 5/03, A63C 5/02

(54) **SKI-WINTERSPORTGERÄT, INSBESONDERE SKITRIKE, ZUM HANGABWÄRTS-GLEITEN MIT DREI SKIERN**
WINTER SKIING DEVICE, IN PARTICULAR A SKITRIKE, FOR GLIDING DOWNHILL WITH THREE SKIS
DISPOSITIF DE SPORT D'HIVER, NOTAMMENT UN SKITRIKE, PERMETTANT DE GLISSER EN DESCENTE SUR TROIS SKIS

(30) Priorität: 19.05.2020 DE 102020002987
(43) Veröffentlichungstag der Anmeldung: 29.03.2023
(73) Patentinhaber: Realization by Investment 4.0 Risikokapitalgesellschaft mbH, 81477 München (DE); Dobrin, Alin, 5671 Bruck an der Großglocknerstaße (AT)
(72) Erfinder: DOBRIN, Alin, 38002 Santa Cruz de Tenerife (ES)
(74) Vertreter: Wenzel Nemetzade Warthmüller Patentanwälte Part mbB
(86) Internationale Anmeldenummer: PCT/EP2021/063362
(87) Internationale Veröffentlichungsnummer: WO 2021/234039

(56) Entgegenhaltungen:
- DE-A1- 2 823 004
- DE-A1- 2 902 563
- KR-A- 20040 063 645
- US-A1- 2009 058 023
- US-A1- 2017 057 534

## Beschreibung

Die Erfindung betrifft ein Ski-Wintersportgerät, insbesondere Skitrike, zum Hangabwärts-Gleiten mit drei Skiern.

Die DE2823004 offenbart ein Skischlitten-Wintersportgerät bzw. ein Wintersportgerät. Das Wintersportgerät umfasst ein Gestell, einen lenkbaren vorderen Ski, zwei rückwärtige, zueinander und in Bezug auf das Gestell zwangsweise parallel geführte, höhenverstellbare Standskiern und zwei Fußauflagen. Dabei wird das Wintersportgerät stehend gefahren, wobei die beiderseitig angeordneten Fußauflagen über einen Mechanismus mit den beiden Standskiern verbunden sind, welcher die zwangsweise Parallelführung der Fußauflagen und deren zu den Standskiern derselben Seite gleichgesinnte Höhenverstellung gewährleistet.

Aus der US 2009/0058023 A1 ist ein "tri-axial control device" bzw. ein dreiachsiges Steuergerät bekannt. Auf dem dreiachsigen Steuergerät kann eine Person fahren, indem sie auf Pedaleinheiten steht. Die Pedaleinheiten sind an einer axialen Steuerung - ähnliche einem Fahrradlenker - befestigt. Das axiale Steuerelement kann nach vorne und hinten gedreht werden sowie den vorderen Skier oder das vordere Rad drehen.

Aus der US 2017/0057534 A1 ist ein "ski bike with multiple steering components" bekannt, welches drei Skier aufweist, die ähnlich einem Dreirad angeordnet sind.

Bei diesem "ski bike" stellt sich ein Nutzer auf eine Stehvorrichtung, welche zwei nebeneinander angeordnete Ski aufweist, um für jeden Fuß eines Nutzers einen Ski zur Verfügung zu stellen. Eine Haltevorrichtung zum Festhalten per Hand bietet dem Nutzer die Möglichkeit sich festzuhalten. Im Ergebnis steht ein Nutzer auf dem "Ski-Bike" ähnlich wie auf einem Fahrrad, wobei die Pedale und das Vorderrad durch Ski ersetzt sind, und wobei das Hinterrad entfällt.

Mit diesem "ski bike" ist es allerdings umständlich in einer Gondel einer Seilbahn zu fahren, da dieses einen erheblichen Platzbedarf aufweist, bzw. ein hohes Raumvolumen aufweist, das für den Transport notwendig ist.

Dadurch können z. B. anstelle von acht Skifahrern mit Skiern lediglich zwei oder drei "Ski-Biker" mit ihren "ski bikes" eine einzige Gondel nutzen. Dies ist insbesondere in Skigebieten mit hoher Auslastung ein Problem, da weniger Personen beförderbar sind.

Daher ist es Aufgabe der vorliegenden Erfindung, ein Ski-Wintersportgerät, insbesondere ein Skitrike, zum Hangabwärts-Gleiten mit drei Skiern anzugeben, welches vorzugsweise kostengünstig und materialsparend herstellbar ist sowie ein geringes Raumvolumen einnimmt bzw. einen geringen Platzbedarf aufweist, um z. B. bei einem Transport in einer Gondel einer möglichst hohen Zahl von Personen die Beförderung zu ermöglichen.

Diese Aufgabe wird erfindungsgemäß durch die Merkmale des unabhängigen Patentanspruchs gelöst. Weitere vorteilhafte Weiterbildungen sind Gegenstand der Unteransprüche.

Erfindungsgemäß umfasst bei einem ersten Aspekt der vorliegenden Erfindung ein Ski-Wintersportgerät, insbesondere Skitrike, zum Hangabwärts-Gleiten mit drei anordenbaren Skiern eine Stehvorrichtung, auf welcher ein Nutzer stehen kann.

"Zum Hangabwärts-Gleiten mit drei anordenbaren Skiern" kann in der vorliegenden Beschreibung so verstanden werden, dass das Ski-Wintersportgerät ausgebildet und eingerichtet ist, mit drei Skiern hangabwärts zu gleiten. Anders ausgedrückt, können an dem Ski-Wintersportgerät drei Skier angeordnet werden, um mit dem Ski-Wintersportgerät hangabwärts zu gleiten. Der Vollständigkeit halber wird darauf hingewiesen, dass bei Anordnung von lediglich zwei Skiern das Ski-Wintersportgerät schlecht oder gar nicht benutzbar sein kann.

An der Stehvorrichtung sind zwei Skier anordenbar, die in Fahrtrichtung nebeneinander anordenbar sind, sodass für jeden Fuß eines Nutzers ein Ski zur Verfügung steht. Die beiden Skier können so an der Stehvorrichtung anordenbar sein, dass diese hüftbreit nebeneinander angeordnet sind.

Ferner umfasst das Ski-Wintersportgerät eine Rahmenvorrichtung zum Verbinden der Stehvorrichtung mit einer Haltevorrichtung zum Festhalten per Hand, wobei die Rahmenvorrichtung und die Stehvorrichtung relativ bewegbar miteinander verbunden sind.

Die Rahmenvorrichtung und die Stehvorrichtung sind zueinander klappbar ausgebildet, sodass das benötigte Raumvolumen des Ski-Wintersportgeräts, insbesondere die Gesamtlänge und/oder die Gesamthöhe des Ski-Wintersportgeräts, reduzierbar ist.

Unter dem Begriff "Raumvolumen" kann in der vorliegenden Beschreibung verstanden werden, dass ein rechteckiger Quader mit einer Höhe, einer Länge und einer Tiefe, über das Ski-Wintersportgerät gestülpt wird, wobei das Ski-Wintersportgerät an jeder Fläche des Quaders kontaktierend anliegt. Anders ausgedrückt, passt das Ski-Wintersportgerät genau in das Raumvolumen eines rechteckigen Quaders. Bei diesem rechteckigen Quader kann eine Seitenfläche mit parallel zur Erdoberfläche bzw. zum Boden ausgerichtet sein. Hierbei wird ferner unter "Raumvolumen" verstanden, dass das Ski-Wintersportgerät in einem Betriebs- und/oder Transportzustand jeweils eine Position einnimmt, in welcher dieses das kleinstmögliche Volumen oder die kleinstmögliche Größe oder den geringsten Platzbedarf oder den geringsten Raumbedarf aufweist. Ferner kann unter "Raumvolumen" das Produkt aus Gesamtlänge, Gesamthöhe und/oder Tiefe verstanden werden, wobei sich das "Raumvolumen" in einem Betriebszustand des Ski-Wintersportgeräts von einem "Raumvolumen" in einem Transportzustand des Ski-Wintersportgeräts unterscheiden kann. Zudem kann unter "klappbar" oder "klappen" eine Anordnung verstanden werden, bei der Teile und/oder Vorrichtungen und/oder Komponenten und/oder Elemente miteinander drehbar verbunden sind.

Ferner kann das Ski-Wintersportgerät ausgebildet sein, von einem Transportzustand in einem Betriebszustand und umgekehrt transformiert bzw. überführt zu werden, insbesondere werkzeuglos überführt zu werden.

Im Transportzustand kann das Ski-Wintersportgerät zum Einsatzort transportierbar sein.

Im Betriebszustand kann das Ski-Wintersportgerät zum Hangabwärts-Gleiten einsatzbereit sein.

Auch ist es möglich, dass das Ski-Wintersportgerät im Betriebszustand ein im Vergleich zum Transportzustand größeres Raumvolumen, insbesondere eine größere Gesamtlänge und/oder Gesamthöhe, aufweist.

Im Transportzustand kann die Gesamtlänge des Ski-Wintersportgeräts um wenigstens 15 % oder um wenigstens 30 % geringer sein als im Betriebszustand.

Die Gesamtlänge des Ski-Wintersportgeräts kann im Betriebszustand und in Fahrtrichtung gesehen von der Entfernung von dem vordersten Ende der Rahmenvorrichtung oder einer Haltevorrichtung mit oder ohne Lenkgabel zum hintersten Ende der Stehvorrichtung, insbesondere zum hinteren Ende mindestens eines Befestigungsrahmenteils gebildet werden.

Die Gesamtlänge des Ski-Wintersportgeräts kann im Transportzustand und in Fahrtrichtung gesehen von der Entfernung von einem oberen Ende eines Neigeteils der Stehvorrichtung zum hintersten Ende der Stehvorrichtung, insbesondere zum hinteren Ende mindestens eines Befestigungsrahmenteils gebildet werden.

Ferner kann die Gesamtlänge des Ski-Wintersportgeräts im Transportzustand und in Fahrtrichtung gesehen von dem Ende der Haltevorrichtung, das entgegen der Fahrtrichtung gesehen das im Betriebszustand hinterste Ende der Stehvorrichtung, insbesondere das hintere Ende von Befestigungsrahmenteilen, überragt, zu einem oberen Ende eines Neigeteils einer ersten Verbindungsvorrichtung gebildet werden, die die Rahmenvorrichtung mit der Stehvorrichtung relativ bewegbar zueinander verbindet.

Im Transportzustand kann die Gesamthöhe des Ski-Wintersportgeräts um wenigstens 15 % oder um wenigstens 30 % geringer sein als im Betriebszustand.

Die Gesamthöhe des Ski-Wintersportgeräts kann im Betriebszustand quer zur Fahrtrichtung gesehen von der Entfernung von dem höchsten Ende der Rahmenvorrichtung oder einer Haltevorrichtung zum Erdboden oder zu mindestens einem Befestigungsrahmenteil der Stehvorrichtung gebildet werden.

Auch kann die Gesamthöhe des Ski-Wintersportgeräts im Transportzustand quer zur Fahrtrichtung gesehen von der Entfernung von dem höchsten Ende der Rahmenvorrichtung oder der Haltevorrichtung zum Erdboden oder zu mindestens einem Befestigungsrahmenteil der Stehvorrichtung gebildet werden.

Dabei können Gesamtlänge und/oder Gesamthöhe so verstanden und ermittelt werden, dass bei deren Ermittlung zumindest ein Ski oder die Skier oder mindestens ein Befestigungsrahmenteil der Stehvorrichtung auf dem Boden bzw. der Erdoberfläche aufliegt.

Des Weiteren können in einem Transportzustand die Rahmenvorrichtung und die Stehvorrichtung, ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegt werden.

Auch ist denkbar, dass in einem Transportzustand, in welchem das Ski-Wintersportgerät zum Einsatzort transportierbar ist, die Rahmenvorrichtung in Richtung der Stehvorrichtung oder umgekehrt klappbar ist, sodass das Raumvolumen, insbesondere die Gesamtlänge und/oder die Gesamthöhe, des Ski-Wintersportgeräts im Vergleich zum Betriebszustand verkleinert ist.

Des Weiteren können in einem Betriebszustand die Rahmenvorrichtung und die Stehvorrichtung in einem eingeschränkten Winkelbereich oder in einem eingeschränkten Bereich relativ zueinander bewegbar sein.

**In** der gesamten Beschreibung können die Begriffe "eingeschränkter Winkelbereich" und "eingeschränkter Bereich" synonym verwendet werden.

Dabei kann im Betriebszustand die Rahmenvorrichtung in einem eingeschränkten Winkelbereich relativ bewegbar zur Stehvorrichtung ausgebildet sein, sodass Unebenheiten der Skipiste beim Hangabwärts-Gleiten von der relativen Bewegung der Rahmenvorrichtung und der Stehvorrichtung im Rahmen des eingeschränkten Winkelbereichs kompensierbar sind.

Ferner kann das Ski-Wintersportgerät so ausgebildet sein, dass die Rahmenvorrichtung und die Stehvorrichtung beispielsweise nach dem werkzeuglosen, und zerstörungsfreien Lösen einer Schnellverbindungseinrichtung einer ersten Verbindungsvorrichtung über einen eingeschränkten Winkelbereich hinaus drehbar miteinander verbunden bleiben, sodass das Ski-Wintersportgerät durch Bewegen der Rahmenvorrichtung relativ zur Stehvorrichtung vom Betriebszustand in den Transportzustand und umgekehrt überführbar ist.

Zusätzlich oder alternativ kann das Ski-Wintersportgerät, insbesondere im Betriebszustand, so ausgebildet sein, dass die Rahmenvorrichtung und die Stehvorrichtung beispielsweise nach dem werkzeuglosen und lösbaren Installieren einer Schnellverbindungseinrichtung einer ersten Verbindungsvorrichtung in einem eingeschränkten Winkelbereich drehbar miteinander verbunden sind, sodass durch Bewegen der Rahmenvorrichtung relativ zur Stehvorrichtung Unebenheiten der Skipiste beim Hangabwärts-Gleiten von der relativen Bewegung der Rahmenvorrichtung und der Stehvorrichtung im Rahmen des eingeschränkten Winkelbereichs kompensierbar sind, wobei ein Überführen vom Betriebszustand in den Transportzustand und umgekehrt durch Bewegen der Rahmenvorrichtung relativ zur Stehvorrichtung nicht möglich ist.

Auch ist denkbar, dass der eingeschränkte Winkelbereich eine relative Drehbewegung zwischen 15 und 30 Grad von der Rahmenvorrichtung zu der Stehvorrichtung gestattet.

Ferner kann der eingeschränkte Winkelbereich eine relative Drehbewegung zwischen 15 und 30 Grad, von einem Rahmenbauteil der Rahmenvorrichtung zu einem Rahmenelement der Stehvorrichtung oder zu einem Befestigungsrahmenteil der Stehvorrichtung gestatten.

Des Weiteren kann das Ski-Wintersportgerät so ausgebildet sein, dass die Rahmenvorrichtung und die Stehvorrichtung zusammen im Betriebszustand eine L-Form, ähnlich einem Eishockeyschläger, aufweisen. So können also die Rahmenvorrichtung und die Stehvorrichtung zusammen im Betriebszustand einen Winkel zwischen 100 und 150 Grad oder einen 135-Grad-Winkel einschließen. Ein derartiger Winkel ermöglicht eine ergonomische Haltung auf dem Ski-Wintersportgerät.

Ein zweiter Aspekt der vorliegenden Erfindung umfasst ein Ski-Wintersportgerät, insbesondere Skitrike, zum Hangabwärts-Gleiten mit drei anordenbaren Skiern.

Es wird darauf hingewiesen, dass die Merkmale des Ski-Wintersportgeräts, wie sie unter dem zweiten Aspekt erwähnt werden, einzeln oder miteinander kombinierbar bei dem Ski-Wintersportgerät nach dem ersten Aspekt Anwendung finden können.

Auch können, die oben unter dem ersten Aspekt der Erfindung genannten Merkmale mit den Merkmalen nach dem zweiten Aspekt der Erfindung kombiniert werden.

So kann ein Ski-Wintersportgerät, insbesondere Skitrike, zum Hangabwärts-Gleiten mit drei anordenbaren Skiern, insbesondere nach dem ersten Aspekt, eine Haltevorrichtung zum Festhalten per Hand, bzw. an welcher sich ein Nutzer festhalten kann, aufweisen, wobei an der Haltevorrichtung ein Ski anordenbar ist.

Ferner kann das Ski-Wintersportgerät eine Rahmenvorrichtung zum Verbinden der Haltevorrichtung mit einer Stehvorrichtung, auf welcher ein Nutzer stehen kann, aufweisen.

Zudem können die Rahmenvorrichtung und die Haltevorrichtung zueinander klappbar ausgebildet sein, sodass das benötigte Raumvolumen des Ski-Wintersportgeräts, insbesondere die Gesamtlänge und/oder die Gesamthöhe des Ski-Wintersportgeräts, reduzierbar ist.

Des Weiteren kann das Ski-Wintersportgerät um wenigstens eine Achse klappbar sein, welche senkrecht zur Fahrtrichtung des Ski-Wintersportgeräts orientiert ist.

Denkbar ist, dass die Rahmenvorrichtung und die Stehvorrichtung um wenigstens eine horizontal liegende Achse klappbar und/oder bewegbar sind, die quer zur Fahrtrichtung ausgerichtet ist.

Auch können die Rahmenvorrichtung und die Haltevorrichtung um wenigstens eine horizontal liegende Achse klappbar und/oder bewegbar sein, die quer zur Fahrtrichtung ausgerichtet ist.

Ferner ist es möglich, dass in einem Transportzustand die Rahmenvorrichtung und die Haltevorrichtung, ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegbar sind.

In einem Transportzustand, in welchem das Ski-Wintersportgerät zum Einsatzort transportierbar ist, kann die Haltevorrichtung in Richtung der Rahmenvorrichtung oder umgekehrt geklappt sein, sodass das Raumvolumen, insbesondere die Gesamtlänge und/oder die Gesamthöhe, des Ski-Wintersportgeräts im Vergleich zu einem Betriebszustand verkleinert ist, in welchem das Ski-Wintersportgerät zum Hangabwärts-Gleiten einsatzbereit ist.

Auch kann das Ski-Wintersportgerät so ausgebildet sein, dass die Rahmenvorrichtung und die Haltevorrichtung zusammen im Betriebszustand eine auf dem Kopf stehende V-förmige Anordnung aufweisen.

Im Betriebszustand können die Rahmenvorrichtung und die Haltevorrichtung um wenigstens eine horizontal liegende Achse, die quer zur Fahrtrichtung ausgerichtet ist, rotationsstarr zueinander ausgebildet sein.

Im Transportzustand können die Rahmenvorrichtung und die Haltevorrichtung um wenigstens eine horizontal liegende Achse, die quer zur Fahrtrichtung ausgerichtet ist, drehbar zueinander ausgebildet sein.

Des Weiteren kann das Ski-Wintersportgerät so ausgebildet sein, dass die Rahmenvorrichtung und die Haltevorrichtung beispielsweise nach dem werkzeuglosen und zerstörungsfreien Lösen einer Schnellverbindungseinrichtung einer zweiten Verbindungsvorrichtung drehbar miteinander verbunden bleiben, sodass durch Bewegen der Haltevorrichtung relativ zur Rahmenvorrichtung das Ski-Wintersportgerät vom Betriebszustand in den Transportzustand und umgekehrt überführbar ist.

Ferner kann das Ski-Wintersportgerät so ausgebildet sein, dass die Rahmenvorrichtung und die Haltevorrichtung beispielsweise nach dem werkzeuglosen und lösbaren Installieren einer Schnellverbindungseinrichtung einer zweiten Verbindungsvorrichtung rotationsstarr miteinander verbunden sind, sodass ein Überführen vom Betriebszustand in den Transportzustand und umgekehrt durch Bewegen der Rahmenvorrichtung relativ zur Haltevorrichtung nicht möglich ist.

Ein dritter Aspekt der vorliegenden Erfindung umfasst ein Ski-Wintersportgerät, insbesondere Skitrike, zum Hangabwärts-Gleiten mit drei anordenbaren Skiern.

Es wird ausdrücklich darauf hingewiesen, dass die Merkmale, wie sie unter dem dritten Aspekt der Erfindung erwähnt werden, einzeln oder miteinander kombinierbar bei dem ersten und/oder zweiten Aspekt Anwendung finden können.

Auch können, die oben unter dem ersten und/oder zweiten Aspekt der Erfindung genannten Merkmale mit den Merkmalen nach dem dritten Aspekt der Erfindung kombiniert werden.

So kann ein Ski-Wintersportgerät, insbesondere Skitrike, zum Hangabwärts-Gleiten mit drei anordenbaren Skiern, nach dem ersten und/oder zweiten Aspekt eine Haltevorrichtung zum Festhalten per Hand aufweisen, wobei an der Haltevorrichtung ein Ski anordenbar ist.

Zudem kann die Haltevorrichtung ein Steuerrohrelement zur Aufnahme eines Gabelschaftrohrs einer Lenkgabel aufweisen.

Das Steuerrohrelement kann eine relative Drehung von Gabelschaftrohr und Rahmenvorrichtung gestatten, um mithilfe einer Drehung der Lenkgabel eine Richtungsänderung für einen Ski an der Haltevorrichtung zu erzielen.

Die Haltevorrichtung zum Festhalten kann eine Lenkstange und eine Lenkgabel, insbesondere eine Fahrradgabel, umfassen.

Die Haltevorrichtung und die Rahmenvorrichtung können so ausgebildet sein, dass die Lenkstange relativ zur Rahmenvorrichtung drehbar ist, sodass die Richtung eines Skis an der Haltevorrichtung in seiner Richtung veränderbar ist.

Auch kann das Ski-Wintersportgerät eine Stehvorrichtung, auf welcher ein Nutzer stehen kann, umfassen, wobei an der Stehvorrichtung zwei Skier anordenbar sind, die in Fahrtrichtung nebeneinander anordenbar sind, sodass für jeden Fuß eines Nutzers ein Ski zur Verfügung steht.

Des Weiteren kann das Ski-Wintersportgerät eine Rahmenvorrichtung zum Verbinden der Haltevorrichtung mit der Stehvorrichtung aufweisen, wobei die Rahmenvorrichtung und die Stehvorrichtung relativ bewegbar miteinander verbunden sind.

Zudem kann sowohl die Rahmenvorrichtung und die Stehvorrichtung zueinander klappbar als auch die Rahmenvorrichtung und die Haltevorrichtung zueinander klappbar ausgebildet sein, sodass das benötigte Raumvolumen des Ski-Wintersportgeräts, insbesondere die Gesamtlänge und/oder die Gesamthöhe des Ski-Wintersportgeräts, reduzierbar ist.

Ferner kann das Ski-Wintersportgerät eine erste Verbindungsvorrichtung aufweisen, die die Rahmenvorrichtung mit der Stehvorrichtung relativ bewegbar zueinander verbindet.

Die erste Verbindungsvorrichtung kann ausgebildet sein, eine relative Bewegung der Rahmenvorrichtung und der Stehvorrichtung zueinander zu ermöglichen, insbesondere zu vergrößern und/oder zu verkleinern, aber insbesondere nicht zu unterbinden.

Auch kann die erste Verbindungsvorrichtung die Rahmenvorrichtung und die Stehvorrichtung gelenkig miteinander verbinden.

Des Weiteren kann die Rahmenvorrichtung und die Stehvorrichtung, insbesondere ausschließlich, über die erste Verbindungsvorrichtung miteinander verbunden sein.

Auch ist es denkbar, dass die Rahmenvorrichtung, insbesondere ausschließlich, an der ersten Verbindungsvorrichtung angeordnet ist.

Ferner ist es möglich, dass die Stehvorrichtung, insbesondere ausschließlich, an der ersten Verbindungsvorrichtung angeordnet ist.

Ferner kann die erste Verbindungsvorrichtung ausgebildet sein, in einem Betriebszustand, in welchem das Ski-Wintersportgerät zum Hangabwärts-Gleiten einsatzbereit ist, die relative Bewegung der Rahmenvorrichtung und der Stehvorrichtung so zueinander einzuschränken, dass diese in einem eingeschränkten Bereich, insbesondere in einem eingeschränkten Winkelbereich, relativ zueinander bewegbar sind und somit ein sicheres Gleiten hangabwärts gewährleisten.

Zudem ist in einem Betriebszustand, in welchem das Ski-Wintersportgerät zum Hangabwärts-Gleiten einsatzbereit ist, die relative Bewegung der Rahmenvorrichtung und der Stehvorrichtung so zueinander eingeschränkt, dass diese in einem eingeschränkten Bereich, insbesondere in einem eingeschränkten Winkelbereich, relativ zueinander bewegbar sind und somit ein sicheres Gleiten hangabwärts gewährleisten.

Möglich ist auch, dass der eingeschränkte Bereich, insbesondere der eingeschränkte Winkelbereich, eine Bewegung zwischen 2 und 5 cm, insbesondere eine Drehbewegung zwischen 15 und 30 Grad, von der Rahmenvorrichtung zu der Stehvorrichtung gestattet.

Ferner ist es auch möglich, dass der eingeschränkte Bereich, insbesondere der eingeschränkte Winkelbereich, eine Bewegung zwischen 2 und 5 cm, insbesondere eine Drehbewegung zwischen 15 und 30 Grad, von einem Rahmenbauteil der Rahmenvorrichtung zu einem Rahmenelement der Stehvorrichtung oder zu einem Befestigungsrahmenteil der Stehvorrichtung gestattet.

Des Weiteren ist es denkbar, in einem Transportzustand, in welchem das Ski-Wintersportgerät zum Einsatzort transportierbar ist, die relative Bewegung der Rahmenvorrichtung und der Stehvorrichtung so zu vergrößern, dass durch Klappen der Rahmenvorrichtung und der Stehvorrichtung zueinander, insbesondere in Fahrtrichtung gesehen, das Raumvolumen des Ski-Wintersportgeräts, insbesondere die Gesamtlänge und/oder die Gesamthöhe des Ski-Wintersportgeräts, im Vergleich zu einem Betriebszustand verkleinerbar ist.

Des Weiteren kann die erste Verbindungsvorrichtung ausgebildet sein, in einem Transportzustand, in welchem das Ski-Wintersportgerät zum Einsatzort transportierbar ist, die relative Bewegung der Rahmenvorrichtung und der Stehvorrichtung so zu vergrößern, dass durch Klappen der Rahmenvorrichtung und der Stehvorrichtung zueinander, insbesondere in Fahrtrichtung gesehen, das Raumvolumen des Ski-Wintersportgeräts, insbesondere die Gesamtlänge und/oder die Gesamthöhe des Ski-Wintersportgeräts, im Vergleich zum Betriebszustand verkleinerbar ist.

Ferner ist in einem Transportzustand, in welchem das Ski-Wintersportgerät zum Einsatzort transportierbar ist, die relative Bewegung der Rahmenvorrichtung und der Stehvorrichtung so vergrößert, dass diese über einen eingeschränkten Bereich oder einen eingeschränkten Winkelbereich hinaus relativ zueinander bewegbar sind und somit das Raumvolumen des Ski-Wintersportgeräts, insbesondere die Gesamthöhe und/oder die Gesamtlänge des Ski-Wintersportgeräts, im Vergleich zu einem Betriebszustand reduzierbar ist.

Auch ist es möglich, dass die erste Verbindungsvorrichtung ausgebildet ist, in einem Transportzustand, in welchem das Ski-Wintersportgerät zum Einsatzort transportierbar ist, die relative Bewegung der Rahmenvorrichtung und der Stehvorrichtung so zu vergrößern, dass diese über den eingeschränkten Bereich hinaus relativ zueinander bewegbar sind und somit das Raumvolumen des Ski-Wintersportgeräts, insbesondere die Gesamthöhe und/oder die Gesamtlänge des Ski-Wintersportgeräts, im Vergleich zum Betriebszustand reduzierbar ist.

Auch kann die erste Verbindungsvorrichtung an der Rahmenvorrichtung und/oder an der Stehvorrichtung, insbesondere unmittelbar, angeordnet sein.

Zudem ist denkbar, dass die erste Verbindungsvorrichtung ausgebildet ist, die Rahmenvorrichtung und die Stehvorrichtung um wenigstens eine horizontal liegende Achse zu klappen und/oder zu bewegen, die quer zur Fahrtrichtung ausgerichtet ist.

Ferner kann in einem Transportzustand eine relative Bewegung der Rahmenvorrichtung hin zur Stehvorrichtung beispielsweise mithilfe der ersten Verbindungsvorrichtung derart vergrößerbar sein, dass die Rahmenvorrichtung und die Stehvorrichtung, ähnlich wie drehbar miteinander verbundene Hebel einer schließenden Schere oder ähnlich einem klappbaren Messer eines Taschenmessers, klappbar ausgebildet sind, wodurch das benötigte Raumvolumen des Ski-Wintersportgeräts, insbesondere die Gesamthöhe und/oder die Gesamtlänge des Ski-Wintersportgeräts, im Vergleich zum Betriebszustand reduzierbar ist.

Des Weiteren kann im Betriebszustand eine relative Bewegung der Rahmenvorrichtung hin zur Stehvorrichtung beispielsweise mithilfe der ersten Verbindungsvorrichtung derart verkleinert sein, dass die erste Verbindungsvorrichtung ein Klappen unterbindet, wobei jedoch ein sicheres Gleiten hangabwärts sichergestellt ist.

Es kann auch möglich sein, dass im Betriebszustand eine relative Bewegung der Rahmenvorrichtung hin zur Stehvorrichtung beispielsweise mithilfe der ersten Verbindungsvorrichtung derart verkleinerbar oder verkleinert ist, dass eine Bewegung der Rahmenvorrichtung relativ zur Stehvorrichtung über die erste Verbindungsvorrichtung zumindest größtenteils, insbesondere auf einen eingeschränkten Winkelbereich, beschränkbar ist.

Dabei kann der eingeschränkte Winkelbereich eine Drehbewegung zwischen 15 und 30 Grad, von der Rahmenvorrichtung zu der Stehvorrichtung gestatten.

Zudem kann der eingeschränkte Winkelbereich eine Drehbewegung zwischen 15 und 30 Grad, von einem Rahmenbauteil der Rahmenvorrichtung zu einem Rahmenelement der Stehvorrichtung oder zu einem Befestigungsrahmenteil der Stehvorrichtung gestatten.

Des Weiteren kann die erste Verbindungsvorrichtung ausgebildet sein, ein Bewegen und/oder Klappen der Rahmenvorrichtung relativ zur Stehvorrichtung zu zulassen.

Bei einem Klappen kann die Rahmenvorrichtung innerhalb eines größeren Winkelbereichs relativ zur Stehvorrichtung bewegt werden, als bei einem Bewegen. Beim Bewegen kann der Winkelbereich oder der eingeschränkte Winkelbereich im Vergleich zum Winkelbereich beim Klappen kleiner sein, beispielsweise kleiner gleich 50 %.

Dabei kann die erste Verbindungsvorrichtung mindestens ein erstes Verbindungselement mit einer ersten Drehstelle, ausbildbar zu einem Drehgelenk, umfassen, an welcher die Rahmenvorrichtung, insbesondere im Transportzustand, vorzugsweise nur im Transportzustand, drehbar befestigt ist.

Auch kann die erste Verbindungsvorrichtung mindestens ein erstes Verbindungselement mit einer zweiten Drehstelle, ausbildbar zu einem Drehgelenk, umfassen, an welcher das erste Verbindungselement mit einem zweiten Verbindungselement der ersten Verbindungsvorrichtung drehbar befestigt ist.

Ferner kann die erste und zweite Drehstelle an entgegengesetzten Enden des ersten Verbindungselements angeordnet sein.

Auch können die erste und/oder zweite Drehstelle einen Teil eines Drehgelenks bilden.

Des Weiteren ist es möglich, dass das erste Verbindungselement, insbesondere zwischen der ersten und zweiten Drehstelle, eine Verbindungsstelle zur Rahmenvorrichtung umfasst, um mithilfe einer werkzeuglosen, zerstörungsfreien, lösbar befestigbaren Schnellverbindungseinrichtung die relative Bewegung zwischen Rahmenvorrichtung und erstem Verbindungselement um die erste Drehstelle zu unterbinden.

Zudem kann vorgesehen sein, dass die Verbindungsstelle für eine werkzeuglose, zerstörungsfreie, lösbar befestigbare Schnellverbindungseinrichtung als Durchführung durch das erste Verbindungselement ausgebildet ist.

Auch ist es möglich, dass die Verbindungsstelle auf eine werkzeuglose, zerstörungsfreie, lösbar befestigbare Schnellverbindungseinrichtung hinsichtlich Form und Passung, insbesondere ausgebildet als Spiel- oder Übergangspassung, angepasst ist.

Des Weiteren ist es möglich, dass die erste Verbindungsvorrichtung ein zweites Verbindungselement mit einer Drehstelle, ausbildbar zu einem Drehgelenk, umfasst, an welcher ein erstes Verbindungselement der ersten Verbindungsvorrichtung drehbar befestigt ist.

Ferner kann vorgesehen sein, dass die Drehstelle des zweiten Verbindungselements drehbar mit der zweiten Drehstelle des ersten Verbindungselements verbunden ist, um ein Drehgelenk zu bilden.

Dabei kann die Drehstelle des zweiten Verbindungselements innerhalb des zweiten Verbindungselements angeordnet sein.

Zudem kann das zweite Verbindungselement einen ersten und einen zweiten Anschlag für eine werkzeuglose, zerstörungsfrei lösbar befestigbare Schnellverbindungseinrichtung umfassen.

Auch ist es möglich, dass der erste und zweite Anschlag voneinander beabstandet sind, um eine relative Bewegung eines ersten Verbindungselements der ersten Verbindungsvorrichtung zum zweiten Verbindungselement zu begrenzen.

Ferner ist denkbar, dass ein erster Schenkel, gebildet von einer Linie zwischen dem ersten Anschlag und der Drehstelle des zweiten Verbindungselements, und ein zweiter Schenkel, gebildet von einer Linie zwischen dem zweiten Anschlag und der Drehstelle des zweiten Verbindungselements, einen Winkel zwischen 60 und 120 Grad, insbesondere von 100 Grad, einschließen.

Jeder Anschlag kann als Nase ausgebildet sein, die vom zweiten Verbindungselement hervorspringt.

Ferner kann jeder Anschlag hinsichtlich seiner Form auf eine werkzeuglose, zerstörungsfrei lösbar befestigbare Schnellverbindungseinrichtung angepasst sein, um ein zerstörungsfreies Anschlagen zu gewährleisten.

Des Weiteren kann das zweite Verbindungselement zwischen dem ersten und zweiten Anschlag eine gekrümmte Bahn, vorzugsweise eine Kreisbahn, umfassen, insbesondere scheibenförmig ausgebildet sein.

Zudem kann die erste Verbindungsvorrichtung eine werkzeuglose, zerstörungsfrei lösbar befestigbare Schnellverbindungseinrichtung zum Anschlagen an mindestens einem Anschlag eines zweiten Verbindungselements und zum Begrenzen einer relativen Bewegung zwischen einem ersten und einem zweiten Verbindungselement der ersten Verbindungsvorrichtung umfassen.

Auch ist es möglich, dass die Schnellverbindungseinrichtung ausgebildet ist, das erste Verbindungselement mit der Rahmenvorrichtung zu verbinden, insbesondere das erste Verbindungselement werkzeuglos und zerstörungsfrei lösbar an der Rahmenvorrichtung zu befestigen. Auf diese Weise kann eine Drehung des mindestens einen ersten Verbindungselements relativ zur Rahmenvorrichtung um die erste Drehstelle des mindestens einen ersten Verbindungselements unterbunden werden.

Ferner kann die Schnellverbindungseinrichtung an eine Verbindungsstelle eines ersten Verbindungselements der ersten Verbindungsvorrichtung hinsichtlich Form und Passung, insbesondere ausgebildet als Spiel- oder Übergangspassung, angepasst sein.

Im Betriebszustand kann die Schnellverbindungseinrichtung in der Verbindungsstelle des ersten Verbindungselements angeordnet sein, um eine Drehung des ersten Verbindungselements relativ zur Rahmenvorrichtung um die erste Drehstelle des ersten Verbindungselements zu unterbinden.

Im Transportzustand kann die Schnellverbindungseinrichtung aus der Verbindungsstelle des ersten Verbindungselements entfernt sein, sodass eine Drehung des ersten Verbindungselements relativ zur Rahmenvorrichtung um die erste Drehstelle des ersten Verbindungselements möglich ist.

Des Weiteren kann vorgesehen sein, dass die erste Verbindungsvorrichtung ein Neigeteil umfasst, welches ausgebildet ist, sich entsprechend der Neigung der Stehvorrichtung, insbesondere deren zwei anordenbare Skier oder der Neigung der Befestigungsrahmenteile der Stehvorrichtung, quer zu einer Fahrtrichtung zu neigen.

Zudem ist es möglich, dass die erste Verbindungsvorrichtung ein Neigeteil umfasst, welches mit einer Parallelogrammführung verbunden ist, sodass die Neigung der Stehvorrichtung oder der Neigung der Befestigungsrahmenteile der Stehvorrichtung, insbesondere deren zwei anordenbare Skier, quer zu einer Fahrtrichtung auf das Neigeteil übertragbar oder mit dem Neigeteil synchronisierbar ist.

Ferner kann das Neigeteil ein oberes und ein unteres Ende umfassen.

Am unteren Ende des Neigeteils kann ein zweites Verbindungselement der ersten Verbindungsvorrichtung drehbar befestigt sein.

Das untere und das obere Ende können jeweils mit einer ersten und/oder mit einer zweiten Komponente einer Parallelogrammführung, insbesondere drehbar, verbunden sein.

Die erste oder zweite Komponente der Parallelogrammführung kann am unteren Ende mit der zweiten oder ersten Komponente der Parallelogrammführung am oberen Ende parallel ausgerichtet sein.

Das Neigeteil der ersten Verbindungsvorrichtung und das zweite Verbindungselement der ersten Verbindungsvorrichtung können einteilig oder einstückig ausgebildet sein bzw. aus einem einzigen Teil gefertigt oder ausgebildet sein.

Des Weiteren kann die erste Verbindungsvorrichtung, insbesondere deren mindestens eine erstes und/oder zweites Verbindungselement, aus einem Blech gebildet sein, dessen Breite und Länge sehr viel größer sind als dessen Dicke.

Auch kann die erste Verbindungsvorrichtung mittels eines Stanzverfahrens, eines Laserschneidverfahrens, eines Fräsverfahrens und/oder Schneidverfahrens erstellt sein oder erstellt worden sein.

Ein vierter Aspekt der vorliegenden Erfindung umfasst eine Rahmenvorrichtung eines Ski-Wintersportgeräts und zur Verbindung mit einer Haltevorrichtung und/oder zur Verbindung mit einer Stehvorrichtung eines Ski-Wintersportgeräts.

Es wird ausdrücklich darauf hingewiesen, dass die Merkmale, wie sie unter dem vierten Aspekt der Erfindung erwähnt werden, einzeln oder miteinander kombinierbar bei dem ersten, zweiten und/oder dritten Aspekt Anwendung finden können.

Auch können die oben unter dem ersten, zweiten und/oder dritten Aspekt der Erfindung genannten Merkmale mit den Merkmalen nach dem vierten Aspekt der Erfindung kombiniert werden.

Eine Rahmenvorrichtung eines Ski-Wintersportgeräts, insbesondere nach einem der vorangehenden Ansprüche, und zur Verbindung mit einer Haltevorrichtung und/oder zur Verbindung mit einer Stehvorrichtung eines Ski-Wintersportgeräts kann ein Rahmenbauteil mit einem ersten und einem zweiten Ende aufweisen, wobei am ersten Ende eine Stehvorrichtung anordenbar ist.

Ferner kann am zweiten Ende eine Haltevorrichtung anordenbar sein.

Das Rahmenbauteil kann mehrere Aussparungen als Leichtbaumaßnahme umfassen.

Auch kann das Rahmenbauteil aus einem Blech gebildet sein, dessen Breite und Länge sehr viel größer sind als dessen Dicke.

Die Aussparungen können eine runde, ovale und/oder eckige Form, insbesondere eine sechs- oder achteckige Form, aufweisen.

Ferner können die Aussparungen in Form einer Bienenwabenstruktur ausgebildet sein.

Das erste Ende kann eine Drehstelle umfassen, an welcher die erste Verbindungsvorrichtung des Ski-Wintersportgeräts drehbar befestigt ist.

Des Weiteren kann das erste Ende eine Drehstelle, ausbildbar zu einem Drehgelenk, umfassen, an welcher das Rahmenbauteil mit der ersten Drehstelle des ersten Verbindungselements der ersten Verbindungsvorrichtung drehbar verbunden ist, um vorzugsweise ein Drehgelenk zu bilden.

Zudem kann vorgesehen sein, dass das Rahmenbauteil am ersten Ende eine erste Verbindungsstelle zur ersten Verbindungsvorrichtung umfasst, um mithilfe einer werkzeuglosen, zerstörungsfrei lösbar befestigbaren Schnellverbindungseinrichtung die relative Bewegung von Rahmenvorrichtung und einem erstem Verbindungselement der ersten Verbindungsvorrichtung um die Drehstelle zu unterbinden.

Auch kann das zweite Ende eine Rotationsstelle umfassen, an welcher die Haltevorrichtung des Ski-Wintersportgeräts drehbar befestigbar ist.

Zudem kann das Rahmenbauteil am zweiten Ende eine zweite Verbindungsstelle zur Haltevorrichtung umfassen, um mithilfe einer werkzeuglosen, zerstörungsfrei lösbar befestigbaren Schnellverbindungseinrichtung die relative Bewegung von Rahmenvorrichtung und Haltevorrichtung um die Rotationsstelle zu unterbinden.

Die Rotationsstelle und die zweite Verbindungsstelle können voneinander beabstandet sein.

Die zweite Verbindungsstelle kann auf eine werkzeuglose, zerstörungsfrei lösbar befestigbare Schnellverbindungseinrichtung hinsichtlich Form und Passung, insbesondere ausgebildet als Spiel- oder Übergangspassung, angepasst sein.

Ferner können zwei Rahmenbauteile, die voneinander beabstandet sind, um dazwischen ein drittes Verbindungselement zur Verbindung mit der Haltevorrichtung und/oder eine erste Verbindungsvorrichtung, die die Rahmenvorrichtung mit der Stehvorrichtung relativ bewegbar zueinander verbindet, aufzunehmen.

Des Weiteren kann jedes Rahmenbauteil aus einem Blech gebildet sein, dessen Breite und Länge sehr viel größer sind als dessen Dicke.

Auch kann jedes Rahmenbauteil mittels eines Stanzverfahrens, eines Laserschneidverfahrens, eines Fräsverfahrens und/oder Schneidverfahrens erstellt sein oder erstellt worden sein.

Ein fünfter Aspekt der vorliegenden Erfindung umfasst eine Stehvorrichtung eines Ski-Wintersportgeräts, auf welcher ein Nutzer stehen kann.

Es wird ausdrücklich darauf hingewiesen, dass die Merkmale, wie sie unter dem fünften Aspekt der Erfindung erwähnt werden, einzeln oder miteinander kombinierbar bei dem ersten, zweiten, dritten und/oder vierten Aspekt Anwendung finden können.

Auch können, die oben unter dem ersten, zweiten, dritten und/oder vierten Aspekt der Erfindung genannten Merkmale mit den Merkmalen nach dem fünften Aspekt der Erfindung kombiniert werden.

So kann eine Stehvorrichtung eines Ski-Wintersportgeräts, insbesondere eines Ski-Wintersportgeräts nach einem der vorangehenden Aspekte, auf welcher ein Nutzer stehen kann, mindestens ein Befestigungsrahmenteil zur Anordnung einer Fußaufnahmevorrichtung und/oder eines Skis aufweisen.

Das mindestens eine Befestigungsrahmenteil kann in Fahrtrichtung ausgerichtet sein, bzw. zur Fahrtrichtung gleichorientiert sein.

Das mindestens eine Befestigungsrahmenteil kann wenigstens ein Rahmenelement aufweisen, an welchem ein Verbindungsbauteil für eine Fußaufnahmevorrichtung und/oder für einen Ski befestigbar ist.

Des Weiteren kann das mindestens eine Befestigungsrahmenteil wenigstens ein Verbindungsbauteil aufweisen, welches an einem Rahmenelement und/oder an einem Ski und/oder an einer Fußaufnahmevorrichtung befestigbar ist.

Das wenigstens eine Verbindungsbauteil kann ein T-Profil aufweisen, das von zwei Flanschen gebildet wird.

Ferner ist es möglich, dass an dem einen Flansch des T-Profils, der an dem Ende des anderen Flansches mittig und quer zum anderen Flansch angeordnet ist, ein Ski oder eine Fußaufnahmevorrichtung befestigbar ist.

An dem anderen Flansch des T-Profils, dessen Ende an dem einen Flansch angeordnet ist, kann das wenigstens eine Rahmenelement befestigt sein.

Das wenigstens eine Rahmenelement kann aus einem Blech ausgebildet sein, dessen Breite und Länge sehr viel größer sind als dessen Dicke.

Jedes Rahmenelement kann mittels eines Stanzverfahrens, eines Laserschneidverfahrens, eines Fräsverfahrens und/oder Schneidverfahrens erstellt sein oder erstellt worden sein.

Des Weiteren kann das wenigstens eine Rahmenelement an einer dritten oder vierten Komponente einer Parallelogrammführung der Stehvorrichtung, vorzugsweise drehbar, angeordnet sein.

Die Parallelogrammführung kann die Neigung der Befestigungsrahmenteile und somit zugehöriger, anordenbarer Skier quer zu einer Fahrtrichtung synchronisieren.

Ferner kann das mindestens eine Befestigungsrahmenteil, bezogen auf die Fahrtrichtung des Ski-Wintersportgeräts, ein vorderes und ein hinteres Ende umfassen.

Das mindestens eine Befestigungsrahmenteil, insbesondere dessen wenigstens eine Rahmenelement, kann, insbesondere am vorderen Ende, eine Rotationsstelle, ausbildbar zu einem Drehgelenk, umfassen, um welche die dritte oder vierte Komponente einer Parallelogrammführung der Stehvorrichtung drehbar angeordnet ist, insbesondere drehbar befestigt ist.

Am vorderen Ende kann eine Schnellverbindungsstelle, ausbildbar zu einem Drehgelenk, zu einer Parallelogrammführung, insbesondere deren dritter und/oder vierter Komponente, angeordnet sein, um mithilfe einer werkzeuglosen, zerstörungsfrei lösbar befestigbaren Schnellverbindungseinrichtung die relative Bewegung von dritter und/oder vierter Komponente zum Befestigungsrahmenteil oder zu dessen wenigstens einem Rahmenelement um eine Rotationsstelle des mindestens einen Befestigungsrahmenteils zu unterbinden.

Dabei kann das Befestigungsrahmenteil oder dessen wenigstens eine Rahmenelement die Schnellverbindungsstelle aufweisen.

Zudem kann die Schnellverbindungsstelle als Durchführung durch das wenigstens eine Rahmenelement ausgebildet sein.

Die Schnellverbindungsstelle kann hinsichtlich Form und Passung, insbesondere ausgebildet als Spiel- oder Übergangspassung, an eine werkzeuglose, zerstörungsfrei lösbar befestigbare Schnellverbindungseinrichtung angepasst sein.

Das mindestens eine Befestigungsrahmenteil kann zwei Rahmenelemente aufweisen, zwischen denen wenigstens ein Verbindungsbauteil, insbesondere ein Flansch dessen, angeordnet ist, an welchem ein Ski und/oder an welchem eine Fußaufnahmevorrichtung befestigbar ist.

Ferner kann das mindestens eine Befestigungsrahmenteil zwei Rahmenelemente aufweisen, die so voneinander beabstandet sind, dass zwischen diesen beiden wenigstens ein Verbindungsbauteil und/oder eine dritte oder vierte Komponente einer Parallelogrammführung anordenbar sind.

Des Weiteren kann die Stehvorrichtung zwei Befestigungsrahmenteile, insbesondere ein erstes und ein zweites Befestigungsrahmenteil, mit jeweils zwei Rahmenelementen aufweisen, zwischen denen jeweils wenigstens ein Verbindungsbauteil und/oder eine dritte oder vierte Komponente der Parallelogrammführung anordenbar ist, wobei an dem wenigstens einen Verbindungsbauteil ein Ski und/oder an welchem eine Fußaufnahmevorrichtung befestigbar ist.

Dabei können die Befestigungsrahmenteile gleichorientiert, insbesondere parallel, zueinander ausgerichtet sein.

An jedem Befestigungsrahmenteil kann ein Ski und/oder eine Fußaufnahmevorrichtung und/oder eine dritte oder vierte Komponente der Parallelogrammführung befestigbar sein, sodass für jeden Fuß eines Nutzers ein Ski zur Verfügung steht.

Auch kann die Stehvorrichtung ein erstes Befestigungsrahmenteil und ein zweites Befestigungsrahmenteil jeweils zur Anordnung einer Fußaufnahmevorrichtung und/oder jeweils eines Skis aufweisen.

Ferner kann die Stehvorrichtung eine Parallelogrammführung aufweisen, welche die Neigung der Befestigungsrahmenteile und somit optionaler, zugehöriger Skier quer zu einer Fahrtrichtung synchronisiert.

Die Parallelogrammführung kann ein Parallelkurbel-Getriebe oder ein Getriebe einer Viergelenkkette sein, dessen jeweils gegenüberliegende Glieder gleich lang sind.

Die Parallelogrammführung oder deren Komponenten kann eine Gestalt ähnlich einem Blech aufweisen, dessen Breite und Länge sehr viel größer sind als dessen Dicke.

Die Parallelogrammführung, insbesondere deren Komponenten, kann mittels eines Stanzverfahrens, eines Laserschneidverfahrens, eines Fräsverfahrens und/oder Schneidverfahrens erstellt sein oder hergestellt worden sein.

Des Weiteren kann die Parallelogrammführung vier Komponenten umfassen.

Eine erste und zweite Komponente können parallel zueinander, horizontal angeordnet und quer zur Fahrtrichtung ausgerichtet sein.

Zudem kann, insbesondere mittig, an der ersten und zweiten Komponente ein Neigeteil einer ersten Verbindungsvorrichtung angeordnet sein.

Auch können die erste und/oder zweite Komponente der Parallelogrammführung jeweils zwei Schenkel aufweisen, die gegeneinander geneigt sind, insbesondere eine V-Form bilden.

Mittig an der ersten und zweiten Komponente, insbesondere am Übergang von dem einen Schenkel der V-Form zum anderen Schenkel, kann das Neigeteil der ersten Verbindungsvorrichtung drehbar befestigt sein.

Auch ist es möglich, dass die erste und/oder zweite Komponente an ihren Enden jeweils mit einer dritten und/oder vierten Komponente der Parallelogrammführung ein Drehgelenk bilden, dessen Drehachse in Fahrtrichtung orientiert und gegen die Erdoberfläche, ähnlich einem Heckspoiler eines Rennwagens, geneigt ist.

Die erste und/oder zweite Komponente kann mit dem Neigeteil ein Drehgelenk bilden, dessen Drehachse in Fahrtrichtung orientiert und gegen die Erdoberfläche, ähnlich einem Heckspoiler eines Rennwagens, geneigt ist.

Die Parallelogrammführung kann - wie schon erwähnt - vier Komponenten umfassen.

Eine dritte und vierte Komponente können parallel zueinander und in Fahrtrichtung ausgerichtet sein.

An der dritten und vierten Komponente kann eine erste und eine zweite Komponente der Parallelogrammführung drehbar angeordnet sein.

Die dritte und vierte Komponente kann mit der ersten und mit der zweiten Komponente mehrere Drehgelenke bilden.

Eine dritte Komponente kann an einem ersten Befestigungsrahmenteil, insbesondere an deren wenigstens einem Rahmenelement, vorzugsweise drehbar, angeordnet sein.

Auch kann eine vierte Komponente der Parallelogrammführung an einem zweiten Befestigungsrahmenteil, insbesondere an deren wenigstens einem Rahmenelement, vorzugsweise drehbar, angeordnet sein.

Ferner können eine dritte und/oder vierte Komponente der Parallelogrammführung eine L-Form, ähnlich einem Eishockeyschläger, aufweisen. Dabei können die dritte und/oder vierte Komponente einen Winkel zwischen 100 und 150 Grad oder einen 135-Grad-Winkel zwischen zwei Schenkeln einschließen.

Die L-Form kann einen kurzen und einen langen Schenkel umfassen, wobei z. B. der kurze Schenkel an einem Befestigungsrahmenteil, insbesondere an deren wenigstens einem Rahmenelement, und insbesondere drehbar, angeordnet sein kann.

Auch kann der kurze Schenkel ein erstes Ende und ein zweites Ende umfassen, wobei am zweiten Ende der lange Schenkel angeordnet sein kann.

Auch kann am zweiten Ende eine Rotationsstelle, ausbildbar zu einem Drehgelenk, ausgebildet sein, an welcher die dritte und/oder vierte Komponente drehbar am entsprechenden Befestigungsrahmenteil, insbesondere an dessen wenigstens einem Rahmenelement, angeordnet, insbesondere befestigt, sein kann.

Die Rotationsstelle am zweiten Ende und eine entsprechende Rotationsstelle des mindestens einen Befestigungsrahmenteils, insbesondere die Rotationsstelle des wenigstens einen Rahmenelements, können ein Drehgelenk bilden.

Der kurze Schenkel kann zwischen zwei Rahmenelementen eines Befestigungsrahmenteils, insbesondere drehbar, angeordnet sein.

Am ersten Ende des kurzen Schenkels kann eine Schnellverbindungsstelle zu einem Befestigungsrahmenteil, insbesondere zu dessen wenigstens einem Rahmenelement, angeordnet sein, um mithilfe einer werkzeuglosen, zerstörungsfrei lösbar befestigbaren Schnellverbindungseinrichtung die relative Bewegung von dritter und/oder vierter Komponente der Parallelogrammführung zum Befestigungsrahmenteil zu unterbinden.

Die Schnellverbindungsstelle für eine werkzeuglose, zerstörungsfrei lösbar befestigbare Schnellverbindungseinrichtung kann jeweils als Durchführung durch die dritte und/oder vierte Komponente, insbesondere durch deren kurzen Schenkel, ausgebildet sein.

Des Weiteren kann die Schnellverbindungsstelle auf eine werkzeuglose, zerstörungsfrei lösbar befestigbare Schnellverbindungseinrichtung hinsichtlich Form und Passung, insbesondere ausgebildet als Spiel- oder Übergangspassung, angepasst sein.

Am langen Schenkel der dritten und/oder vierten Komponente der Parallelogrammführung kann deren erste und zweite Komponente, also die erste und zweite Komponente der Parallelogrammführung, im Abstand zueinander angeordnet sein.

Ferner kann am langen Schenkel die erste und zweite Komponente drehbar angeordnet sein.

Zudem können die erste und zweite Komponente an den Enden des langen Schenkels der dritten und vierten Komponente der Parallelogrammführung drehbar angeordnet sein.

Auch können der kurze und der lange Schenkel eine Gestalt ähnlich einem Blech aufweisen.

Des Weiteren ist es möglich, dass jeder Schenkel eine Gestalt ähnlich einem Blech aufweist, dessen Breite und Länge sehr viel größer sind als dessen Dicke.

Ferner kann vorgesehen sein, dass die dritte und/oder vierte Komponente mittels eines Stanzverfahrens, eines Laserschneidverfahrens, eines Fräsverfahrens und/oder Schneidverfahrens erstellt ist oder hergestellt worden ist.

Der kurze und der lange Schenkel können um 90 Grad zueinander verdreht und aneinander angeordnet sein.

Die dritte und/oder vierte Komponente, insbesondere deren kurzer und langer Schenkel, können einteilig ausgebildet sein.

In einem Betriebszustand, in welchem das Ski-Wintersportgerät zum Hangabwärts-Gleiten einsatzbereit ist, kann die relative Bewegung der dritten und/oder vierten Komponente der Parallelogrammführung zum Befestigungsrahmenteil unterbunden sein und somit ein sicheres Gleiten hangabwärts gewährleistet werden.

Ferner kann in einem Transportzustand, in welchem das Ski-Wintersportgerät zum Einsatzort transportierbar ist, die relative Bewegung eines Befestigungsrahmenteils zur dritten und/oder vierten Komponente der Parallelogrammführung gestattet sein, sodass durch Drehen der dritten und/oder vierten Komponente und des Befestigungsrahmenteils zueinander, insbesondere in Fahrtrichtung gesehen, das Raumvolumen des Ski-Wintersportgeräts, insbesondere die Gesamthöhe und/oder die Gesamtlänge des Ski-Wintersportgeräts, im Vergleich zum Betriebszustand verkleinerbar ist.

In einem Betriebszustand kann der Winkel zwischen der dritten und/oder vierten Komponente der Parallelogrammführung, insbesondere deren langem Schenkel, und dem zugehörigen Befestigungsrahmenteil, insbesondere zu dessen wenigstens einem Rahmenelement, unveränderbar sein.

Ferner kann in einem Transportzustand der Winkel zwischen der dritten und/oder vierten Komponente, insbesondere deren langem Schenkel, und dem zugehörigen Befestigungsrahmenteil, insbesondere zu dessen wenigstens einem Rahmenelement, veränderbar sein.

Auch kann im Betriebszustand die dritte und/oder vierte Komponente, insbesondere deren langer Schenkel, mit dem zugehörigen Befestigungsrahmenteil einen Winkel zwischen 90 und 150 Grad, insbesondere von 120 Grad, einschließen.

Im Transportzustand kann die dritte und/oder vierte Komponente, insbesondere deren langer Schenkel, mit dem zugehörigen Befestigungsrahmenteil einen Winkel zwischen 150 und 200 Grad, insbesondere von 180 Grad, einschließen.

Auch kann im Transportzustand zur Verkleinerung des Raumvolumens des Ski-Wintersportgeräts die dritte und/oder vierte Komponente der Parallelogrammführung mit dem mindestens einen Befestigungsrahmenteil, insbesondere im Uhrzeigersinn, drehbar verbunden sein.

Die Rotationsstelle am zweiten Ende der dritten und/oder vierten Komponente der Parallelogrammführung und die Rotationsstelle des mindestens einen Befestigungsrahmenteils, insbesondere die Rotationsstelle des wenigstens einen Rahmenelements, können ein Drehgelenk bilden.

Im Transportzustand können die dritte und/oder vierte Komponente in eine Linie mit dem Befestigungsrahmenteil geklappt sein, sodass ein langer Schenkel der dritten und/oder vierten Komponente in Verlängerung des Befestigungsrahmenteils angeordnet ist, wodurch das Raumvolumen, insbesondere die Gesamthöhe und/oder die Gesamtlänge, des Ski-Wintersportgeräts im Vergleich zum Betriebszustand verkleinerbar ist.

Die dritte und/oder vierte Komponente und das Befestigungsrahmenteil können um wenigstens eine horizontal liegende Achse klappbar und/oder bewegbar ausgebildet sein, die quer zur Fahrtrichtung ausgerichtet ist.

Des Weiteren kann die Parallelogrammführung eine fünfte Komponente umfassen, mit welcher die hinteren Enden, bezogen auf die Fahrtrichtung des Ski-Wintersportgeräts, der zwei Befestigungsrahmenteile gelenkig miteinander verbunden sind.

Die fünfte Komponente kann zwei Schenkel aufweisen, die gegeneinander geneigt sind, insbesondere eine V-Form bilden.

Mittig an der fünften Komponente, insbesondere am Übergang von dem einen Schenkel der V-Form zum anderen Schenkel, kann eine Verbindungseinrichtung zur Verbindung der fünften Komponente mit der Rahmenvorrichtung und/oder mit der ersten Verbindungsvorrichtung angeordnet sein.

Die fünfte Komponente kann an ihren Enden jeweils eine Drehstelle, ausbildbar zu einem Drehgelenk, aufweisen, deren Drehachse in Fahrtrichtung orientiert und gegen die Erdoberfläche, ähnlich einem Heckspoiler eines Rennwagens, geneigt ist.

Die fünfte Komponente kann mittig eine Drehstelle für eine Verbindungseinrichtung aufweisen, deren Drehachse in Fahrtrichtung orientiert und gegen die Erdoberfläche, ähnlich einem Heckspoiler eines Rennwagens, geneigt ist.

Es wird darauf hingewiesen, dass die nachfolgenden Merkmale einzeln oder miteinander kombinierbar bei dem ersten, zweiten, dritten, vierten und/oder fünften Aspekt Anwendung finden können.

So kann die Stehvorrichtung eine Verbindungseinrichtung aufweisen, die die fünfte Komponente der Parallelogrammführung mit der Rahmenvorrichtung und/oder mit der ersten Verbindungsvorrichtung verbindet.

Die Verbindungseinrichtung kann eine veränderbare Länge aufweisen, insbesondere teleskopierbar ausgebildet sein. Zudem ist denkbar, dass die veränderbare Länge arretierbar ist, sodass die Verbindungseinrichtung nach Einstellung der gewünschten Länge auf diese Länge festlegbar ist. Auch ist es möglich, dass die Verbindungseinrichtung eine unveränderliche bzw. unveränderbare Länge aufweist.

Auch kann die Verbindungseinrichtung einen Energiespeicher und/oder einen Energieumwandler aufweisen. So kann also die Verbindungseinrichtung ein Feder- und/oder Dämpferelement aufweisen. Somit können Bewegungen zwischen Rahmenelement und Stehvorrichtung eingeschränkt bzw. gedämpft werden.

Der Energiespeicher und/oder Energieumwandler und/oder die teleskopierbare Ausbildung können in einer Linie angeordnet sein.

Die Verbindungseinrichtung kann über eine werkzeuglose, zerstörungsfrei lösbar befestigbare Schnellverbindungseinrichtung an der Rahmenvorrichtung und/oder an der ersten Verbindungsvorrichtung werkzeuglos und zerstörungsfrei lösbar befestigbar sein.

Ferner kann ein erstes Ende der Verbindungseinrichtung die Schnellverbindungseinrichtung aufnehmen.

Auch kann die Verbindungseinrichtung an ihrem ersten Ende eine Durchführung aufweisen, durch welche die Schnellverbindungseinrichtung hindurchführbar ist.

Eine entsprechende Durchführung kann auch das Rahmenbauteil der Rahmenvorrichtung aufweisen, sodass die Schnellverbindungseinrichtung in die genannten Durchführungen des Rahmenbauteils und der Verbindungseinrichtung einsetzbar ist, um alle miteinander zu verbinden.

Die Durchführung, insbesondere ausgebildet als Bohrloch, kann eine Passung mit der Schnellverbindungseinrichtung bilden, insbesondere eine Spiel- oder Übergangspassung.

Die Verbindungseinrichtung kann ein zweites Ende umfassen, das an der fünften Komponente der Parallelogrammführung befestigt ist, insbesondere drehbar an einer Drehstelle der fünften Komponente befestigt ist, um ein Drehgelenk oder eine starre Verbindung zu bilden.

Die Verbindungseinrichtung kann über eine werkzeuglose, zerstörungsfrei lösbar befestigbare Schnellverbindungseinrichtung an der fünften Komponente der Parallelogrammführung werkzeuglos und zerstörungsfrei lösbar befestigbar sein.

Ferner kann das erste Ende der Verbindungseinrichtung die Schnellverbindungseinrichtung aufnehmen.

Auch kann die Verbindungseinrichtung an ihrem zweiten Ende eine Durchführung aufweisen, durch welche die Schnellverbindungseinrichtung hindurchführbar ist.

Die Durchführung, insbesondere ausgebildet als Bohrloch, kann eine Passung mit der Schnellverbindungseinrichtung bilden, insbesondere eine Spiel- oder Übergangspassung.

Sowohl die Drehstelle der fünften Komponenten als auch das zweite Ende der Verbindungseinrichtung können jeweils eine Durchführung, ausgebildet als Bohrloch, aufweisen bzw. können als solche ausgebildet sein, um eine werkzeuglose, zerstörungsfrei lösbar befestigbare Schnellverbindungseinrichtung aufzunehmen, die die Verbindungseinrichtung und die fünfte Komponente miteinander verbindet.

Die genannten Durchführungen und die Schnellverbindungseinrichtung können hinsichtlich Form und Passung, insbesondere ausgebildet als Spiel- oder Übergangspassung, aufeinander angepasst sein.

Im Ergebnis kann also die Schnellverbindungseinrichtung am ersten und/oder zweiten Ende der Verbindungseinrichtung gelöst werden, um die Verbindungseinrichtung von der fünften Komponente der Parallelogrammführung und/oder der Rahmenvorrichtung schnell und werkzeuglos sowie zerstörungsfrei zu lösen.

Ferner kann die Verbindungseinrichtung wenigstens zweiteilig aufgebaut sein. Die zwei Teile können zueinander beweglich ausgebildet sein. Insbesondere können die beiden Teile über ein sperr- und freigebbares Drehgelenk miteinander verbunden sein.

Hierbei kann jedes Teil der Verbindungseinrichtung oder nur eines der beiden telekopierbar ausgebildet sein.

Auch kann jedes Teil der Verbindungseinrichtung einen Energiespeicher und/oder einen Energieumwandler aufweisen.

Des Weiteren kann die Stehvorrichtung eine Fußaufnahmevorrichtung aufweisen, welche einen Schuh eines Nutzers aufnimmt.

Die Fußaufnahmevorrichtung kann klappbar an mindestens einem Befestigungsrahmenteil der Stehvorrichtung oder an einem Verbindungsbauteil mindestens eines Befestigungsrahmenteils angeordnet sein. Dabei kann die Fußaufnahmevorrichtung um eine Achse klappbar sein, die gleichorientiert zur Fahrtrichtung ist.

Die Fußaufnahmevorrichtung kann ein Bodenteil umfassen, das an einem Verbindungsbauteil mindestens eines Befestigungsrahmenteils befestigt ist und auf welchem die Sohle eines Schuhs eines Nutzers platzierbar ist.

Das Bodenteil kann als Platte und mit Erhebungen ausgebildet sein, um die Reibung zwischen der Sohle eines Schuhs und dem Bodenteil zu erhöhen.

Zudem kann die Stehvorrichtung eine Fußaufnahmevorrichtung aufweisen, welche einen Schuh eines Nutzers aufnimmt.

Die Fußaufnahmevorrichtung kann eine Halteeinrichtung umfassen, die an einem Verbindungsbauteil mindestens eines Befestigungsrahmenteils befestigt ist und welche ein Entfernen eines Schuhs eines Nutzers durch eine Öffnung zwischen der Halteeinrichtung und einem Bodenteil der Fußaufnahmevorrichtung zumindest teilweise unterbindet.

Die Halteeinrichtung kann C-förmig oder U-Profil-förmig ausgebildet sein.

Einer der beiden gegenüberliegenden Flansche der C-förmig oder U-Profil-förmig ausgebildeten Halteeinrichtung kann an einem Bodenteil der Fußaufnahmevorrichtung und/oder an einem Verbindungsbauteil mindestens eines Befestigungsrahmenteils befestigt sein.

Ferner kann die Halteeinrichtung mindestens eine Führung aufweisen, entlang welcher einer der beiden gegenüberliegenden Flansche der C-förmig oder U-Profil ausgebildeten Halteeinrichtung verschiebbar anordenbar ist, um die Entfernung zwischen dem Flansch und dem Bodenteil und/oder die Position in Fahrtrichtung auf die Größe und Form eines Schuhs eines Nutzers anzupassen.

Wie bereits erwähnt, wird vorsorglich darauf hingewiesen, dass die nachfolgenden Merkmale einzeln oder miteinander kombinierbar bei dem ersten, zweiten, dritten, vierten und/oder fünften Aspekt Anwendung finden können.

Des Weiteren kann das Ski-Wintersportgerät so ausgebildet sein, dass die Haltevorrichtung nach dem Lösen einer werkzeuglosen, zerstörungsfrei lösbar befestigbaren Schnellverbindungseinrichtung einer zweiten Verbindungsvorrichtung des Ski-Wintersportgeräts drehbar mit der Rahmenvorrichtung verbunden bleibt, sodass durch Bewegen der Haltevorrichtung relativ zur Rahmenvorrichtung das Ski-Wintersportgerät vom Betriebszustand in den Transportzustand und umgekehrt überführbar ist.

Auch kann das Ski-Wintersportgerät eine zweite Verbindungsvorrichtung zum Befestigen der Haltevorrichtung an der Rahmenvorrichtung umfassen.

Die zweite Verbindungsvorrichtung kann ausgebildet sein, ein Verschwenken der Rahmenvorrichtung und der Haltevorrichtung schnell zu gestatten und schnell zu unterbinden.

Die zweite Verbindungsvorrichtung kann ein drittes Verbindungselement zur Verbindung der Rahmenvorrichtung mit der Haltevorrichtung umfassen.

Das dritte Verbindungselement kann zwischen zwei Rahmenbauteilen der Rahmenvorrichtung angeordnet sein.

Das dritte Verbindungselement kann gelenkig an der Rahmenvorrichtung angeordnet sein.

Zudem kann das dritte Verbindungselement eine Drehstelle, insbesondere ausgebildet als Durchführung und/oder ausbildbar zum Drehgelenk, umfassen, um welche die Haltevorrichtung, insbesondere im Transportzustand, vorzugsweise nur im Transportzustand, drehbar zur Rahmenvorrichtung befestigt ist.

Die Drehstelle kann für einen Bolzen oder eine Schraube ausgebildet sein.

Ferner können die Drehstelle und eine Rotationsstelle des zweiten Endes des Rahmenbauteils der Rahmenvorrichtung ein Drehgelenk bilden.

Die zweite Verbindungsvorrichtung oder das dritte Verbindungselement der zweiten Verbindungsvorrichtung kann einteilig mit der Haltevorrichtung oder einteilig mit einem Steuerrohrelement der Haltevorrichtung ausgebildet sein.

Das dritte Verbindungselement kann eine Schnellverbindungsstelle, insbesondere ausgebildet als Durchführung und/oder ausbildbar zum Drehgelenk, umfassen, um mithilfe einer werkzeuglosen, zerstörungsfrei lösbar befestigbaren Schnellverbindungseinrichtung die relative Drehbewegung von Haltevorrichtung zur Rahmenvorrichtung um die Drehstelle zu unterbinden.

Die Schnellverbindungsstelle und die zweite Verbindungsstelle am zweiten Ende des Rahmenbauteils können zusammen mit der Drehstelle und der Rotationsstelle ein sperrbares und/oder freigebbares Drehgelenk bilden.

Die Schnellverbindungsstelle kann auf eine werkzeuglose, zerstörungsfrei lösbar befestigbare Schnellverbindungseinrichtung hinsichtlich Form und Passung, insbesondere ausgebildet als Spiel- oder Übergangspassung, angepasst werden.

Ferner können die Drehstelle und die Schnellverbindungsstelle voneinander beabstandet sein, sodass eine relative Drehung von der Haltevorrichtung und der Rahmenvorrichtung gestattbar bzw. möglich und/oder unterbindbar ist.

Im Betriebszustand kann die Rahmenvorrichtung und das dritte Verbindungselement form- und/oder kraftschlüssig, insbesondere mithilfe der Schnellverbindungseinrichtung, verbunden sein.

Des Weiteren kann das Ski-Wintersportgerät, insbesondere dessen erste Verbindungsvorrichtung und/oder dessen zweite Verbindungsvorrichtung, wenigstens eine Schnellverbindungseinrichtung zum werkzeuglosen, zerstörungsfreien und lösbaren Befestigen von Vorrichtungen und/oder Elementen aufweisen.

Zudem kann das Ski-Wintersportgerät wenigstens eine Schnellverbindungseinrichtung zum werkzeuglosen, zerstörungsfreien und lösbaren Befestigen von Vorrichtungen und/oder Elementen umfassen und ausgebildet sein, die Haltevorrichtung von der Rahmenvorrichtung und/oder die Stehvorrichtung von der Rahmenvorrichtung und/oder die Parallelogrammführung von dem Befestigungsrahmenteil schnell und zerstörungsfrei zu lösen sowie schnell zu verbinden, um das Ski-Wintersportgerät vom Transportzustand in den Betriebszustand oder umgekehrt zu überführen.

Die Schnellverbindungseinrichtung kann ausgebildet sein, werkzeuglos, zerstörungsfrei und lösbar befestigbar ein erstes Verbindungselement der ersten Verbindungsvorrichtung mit der Rahmenvorrichtung zu verbinden.

Ferner kann die Schnellverbindungseinrichtung ausgebildet sein, werkzeuglos, zerstörungsfrei und lösbar befestigbar die Rahmenvorrichtung, insbesondere deren Rahmenbauteil, mit einem dritten Verbindungselement der zweiten Verbindungsvorrichtung zu verbinden.

Die Schnellverbindungseinrichtung kann ausgebildet sein, werkzeuglos, zerstörungsfrei und lösbar befestigbar die dritte und/oder vierte Komponente der Parallelogrammführung mit dem Befestigungsrahmenteil zu verbinden.

"Werkzeuglos" kann im vorliegenden Zusammenhang so verstanden werden, dass die Schnellverbindungseinrichtung von einem Nutzer per Hand bedienbar ist, ohne den Einsatz eines Werkzeuges, das mitgeführt werden muss.

"Zerstörungsfrei und lösbar befestigbar" bzw. ein "werkzeugloses, zerstörungsfreies und lösbares Befestigen" kann in der vorliegenden Beschreibung so verstanden werden, dass z. B. eine Schnellverbindungseinrichtung zwei Elemente und/oder ein Element mit einer Vorrichtung und/oder zwei Vorrichtungen so aneinander anordenbar sind, dass diese ohne Zerstörung beliebig oft voneinander gelöst und wieder miteinander verbunden werden können.

Des Weiteren kann die Schnellverbindungseinrichtung ähnlich einem Schnellspanner ausgebildet sein.

Der Schnellspanner kann einen Exzenterhebel und eine Spannachse umfassen, an deren einem Ende der Exzenterhebel und an deren anderem Ende ein Klemmelement angeordnet sind.

Der Schnellspanner kann Vorrichtungen und/oder Elemente des Ski-Wintersportgeräts miteinander verklemmen.

Der Schnellspanner kann ein Klemmelement, ausgebildet als Bolzen, umfassen, dessen erstes Ende ein Gewinde aufweist.

Das Klemmelement kann auch eine Mutter zum Verschrauben umfassen.

Ein zweites Ende des Klemmelements kann einen exzentrischen Klemmhebel zum Erzeugen einer Klemmkraft aufweisen.

Ferner kann die Schnellverbindungseinrichtung einen Schnappverschluss aufweisen.

Der Schnappverschluss kann an einer Vorrichtung oder an einem Element oder an der Rahmenvorrichtung ausgebildet sein.

Die Schnellverbindungseinrichtung kann ein Steckelement zur Aufnahme in einem Schnappverschluss aufweisen.

Das Steckelement kann eine Form ähnlich einer Schraube aufweisen.

Zudem kann der Schnappverschluss ähnlich einem Karabiner ausgebildet sein, der ein entsprechendes Gegenstück sichert.

Auch kann die Schnellverbindungseinrichtung einen Ratschenmechanismus zum kraftschlüssigen Verbinden, insbesondere zum Verspannen, der Rahmenvorrichtung mit der ersten Verbindungsvorrichtung, insbesondere deren ersten Verbindungselement, und/oder der Rahmenvorrichtung mit der zweiten Verbindungsvorrichtung und/oder des Befestigungsrahmenteils mit der Parallelogrammführung, aufweisen.

Die Schnellverbindungseinrichtung kann als Spannverschluss ausgebildet sein.

Der Spannverschluss kann einen Bügel und einen Spannhebel umfassen, wobei der Spannverschluss eine Vorrichtung, ein Teil oder ein Element kraft- und/oder formschlüssig mit einer weiteren Vorrichtung, einem weiteren Teil oder einem weiteren Element verbindet.

Ferner kann die Schnellverbindungseinrichtung als Schraubverbindung, insbesondere mit Schraubenkörper mit Außengenwinde und Innengewinde, ausgebildet sein.

Das Innengewinde kann in eine Vorrichtung oder ein Element eingeschnitten sein oder mit einer Schraubenmutter realisiert sein.

Des Weiteren kann die Schnellverbindungseinrichtung als Steckbolzen, insbesondere als Steckbolzen mit einer Sicherung gegen Herausziehen, ausgebildet sein.

Die Schnellverbindungseinrichtung kann als Bolzen ausgebildet sein, deren erstes Ende eine Bohrung für einen Splint, insbesondere für einen Klapp- oder Federsplint, quer zu dessen Achsrichtung aufweist.

Die Schnellverbindungseinrichtung kann als Bolzen ausgebildet sein, deren zweites Ende ein Griffteil zum Greifen und Führen aufweist.

Zudem kann die Schnellverbindungseinrichtung an ihrem ersten Ende ein Gewinde und an seinem zweiten Ende ein Griffteil zum Greifen und Führen aufweisen.

Auch können die Schnellverbindungseinrichtung und die Verbindungs- und Schnellverbindungsstellen eine Passung, insbesondere eine Spiel- oder Übergangspassung, aufweisen.

Des Weiteren kann eine Drehstelle und/oder Rotationsstelle als Durchführung ausgebildet sein.

Das von diesen gebildete Drehgelenk kann sperrbar und/oder freigebbar ausgebildet sein.

Zudem kann das Drehgelenk oder das von einer Drehstelle und/oder Rotationsstelle gebildete Drehgelenk, bei der ein Bauteil gegenüber einem anderen Bauteil relativ drehbar ist, als Gleitlager und/oder als Wälzlager ausgebildet sein.

Ferner kann die Rahmenvorrichtung eine Tragevorrichtung zum Tragen per Hand und/oder zum Einhängen an einer Sitzfläche eines Skilifts aufweisen.

Im Betriebszustand kann die Schnellverbindungseinrichtung die erste Verbindungsvorrichtung mit der Rahmenvorrichtung beweglich verbinden.

Im Transportzustand kann nach Lösen der Schnellverbindungseinrichtung eine Verbindung zwischen der ersten Verbindungsvorrichtung und der Rahmenvorrichtung gelöst sein und eine weitere Verbindung bestehen.

Des Weiteren können an dem Ski-Wintersportgerät drei Skier anordenbar sein.

Die drei Skier können relativ zueinander ähnlich den Rädern eines Dreirads anordenbar sein.

Der Ski der Haltevorrichtung kann in Fahrtrichtung vor den zwei Skiern der Stehvorrichtung angeordnet sein.

Der Ski der Haltevorrichtung kann, quer zur Fahrtrichtung des Ski-Wintersportgeräts gesehen, zwischen zwei Skiern der Stehvorrichtung anordenbar sein.

Das erste Befestigungsrahmenteil und das zweite Befestigungsrahmenteil und somit die zwei Ski können hüftbreit nebeneinander angeordnet sein.

Selbstverständlich ist es auch möglich, dass das Ski-Wintersportgerät Skier, insbesondere drei Skier, umfasst.

In der vorliegenden Beschreibung kann unter "in Fahrtrichtung" eine Richtung verstanden werden, die bei der Stehvorrichtung beginnt, hin zur Rahmenvorrichtung und weiter zur Haltevorrichtung verläuft, wobei alle drei genannten Vorrichtungen in Reihe und hintereinander anordenbar sind.

Ferner können in der gesamten Beschreibung die Begriffe "insbesondere" und "beispielsweise" synonym verwendet werden.

Nachstehend wird die Erfindung anhand eines Ausführungsbeispiels in Verbindung mit zugehörigen Zeichnungen näher erläutert. Hierbei zeigen schematisch:
- **Fig. 1**: eine räumliche Ansicht auf ein Ski-Wintersportgerät;
- **Fig. 2**: eine Draufsicht auf das Ski-Wintersportgerät aus Fig. 1;
- **Fig. 3**: eine Seitenansicht des Ski-Wintersportgeräts aus Fig. 1 in einem Betriebszustand;
- **Fig. 4**: eine Seitenansicht des Ski-Wintersportgeräts aus Fig. 1 beim Übergang vom Betriebszustand aus Figur 1 in einen Transportzustand;
- **Fig. 5**: eine Seitenansicht des Ski-Wintersportgeräts aus Fig. 1 in einem Transportzustand;
- **Fig. 6 bis 8**: eine räumliche Ansicht auf das Ski-Wintersportgerät aus den Fig. 3, 4 bzw. 5 in verschiedenen Zuständen;
- **Fig. 9**: eine weitere räumliche Ansicht auf das Ski-Wintersportgerät aus Fig. 1, allerdings mit nur einem Rahmenteil;
- **Fig. 10**: eine vergrößerte Ansicht aus Fig. 9;
- **Fig. 11**: dieselbe Ansicht wie Fig. 10 mit weiteren nicht dargestellten Elementen;
- **Fig. 12**: eine vergrößerte Ansicht aus Fig. 10;
- **Fig. 13**: dieselbe Ansicht wie Fig. 12 jedoch mit weiteren nicht dargestellten Elementen;
- **Fig. 14**: eine weitere räumliche Ansicht auf das Ski-Wintersportgerät aus Fig. 1,
- **Fig. 15**: eine schematische räumliche Ansicht auf eine Fußaufnahmevorrichtung;
- **Fig. 16**: eine vergrößerte, räumliche Ansicht auf das Ski-Wintersportgerät aus Fig. 1; und
- **Fig. 17**: eine Seitenansicht des Ski-Wintersportgeräts aus Fig. 1 in einem Betriebszustand.

In der nachfolgenden Beschreibung werden gleiche Bezugszeichen für gleiche Gegenstände verwendet.

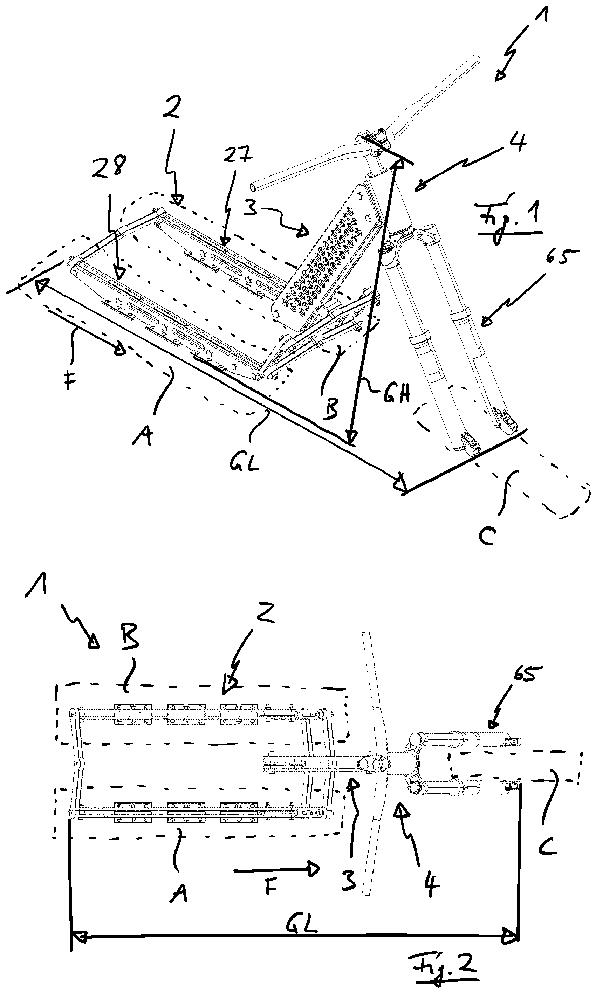

Figur 1 zeigt eine räumliche Ansicht auf ein Ski-Wintersportgerät 1 und Figur 2 eine Draufsicht auf das Ski-Wintersportgerät aus Figur 1.

Genauer dargestellt zeigen Figuren 1 und 2 ein Ski-Wintersportgerät 1, insbesondere Skitrike, zum Hangabwärts-Gleiten mit drei Skiern A, B, C (schematisch angedeutet).

Das Ski-Wintersportgerät 1 weist dabei eine Haltevorrichtung 4 zum Festhalten per Hand auf, wobei an der Haltevorrichtung 4 ein Ski C anordenbar ist.

Ferner hat das Ski-Wintersportgerät 1 eine Stehvorrichtung 2, auf welcher ein Nutzer stehen kann, wobei an der Stehvorrichtung 2 zwei Skier A, B anordenbar sind, die in Fahrtrichtung F nebeneinander anordenbar sind, sodass für jeden Fuß eines Nutzers ein Ski A, B zur Verfügung steht.

Zudem umfasst das Ski-Wintersportgerät 1 eine Rahmenvorrichtung 3 zum Verbinden der Haltevorrichtung 4 mit der Stehvorrichtung 2, wobei die Rahmenvorrichtung 3 und die Stehvorrichtung 2 relativ bewegbar miteinander verbunden sind.

Ferner sind sowohl die Rahmenvorrichtung 3 und die Stehvorrichtung 2 zueinander klappbar als auch die Rahmenvorrichtung 3 und die Haltevorrichtung 4 zueinander klappbar ausgebildet, sodass das benötigte Raumvolumen RV des Ski-Wintersportgeräts 1, insbesondere die Gesamtlänge GL und die Gesamthöhe GH des Ski-Wintersportgeräts 1, reduzierbar ist.

Es ist aber auch möglich, dass nur die Rahmenvorrichtung 3 und die Stehvorrichtung 2 zueinander klappbar ausgebildet sind, sodass das benötigte Raumvolumen RV des Ski-Wintersportgeräts 1, insbesondere die Gesamtlänge GL und die Gesamthöhe GH des Ski-Wintersportgeräts 1, reduzierbar ist.

Als weitere Möglichkeit kommt in Frage, dass lediglich die Rahmenvorrichtung 3 und die Haltevorrichtung 4 zueinander klappbar ausgebildet sind, sodass das benötigte Raumvolumen RV des Ski-Wintersportgeräts 1, insbesondere die Gesamtlänge GL des Ski-Wintersportgeräts 1, reduzierbar ist.

Dabei werden Gesamtlänge GL und Gesamthöhe GH so verstanden und ermittelt, dass bei deren Ermittlung zumindest die Skier bzw. Befestigungsrahmenteile 27, 28 der Stehvorrichtung 2 auf dem Boden bzw. der Erdoberfläche aufliegen.

Bezogen auf die Figuren 1 und 2 wird die Gesamtlänge GL des Ski-Wintersportgeräts 1 in Fahrtrichtung F gesehen von der Entfernung von dem vordersten Ende der Haltevorrichtung 4 mit Lenkgabel 65 zum hintersten Ende der Stehvorrichtung 2, insbesondere zum hinteren Ende von Befestigungsrahmenteilen 27, 28 gebildet.

Die Gesamthöhe GH des Ski-Wintersportgeräts 1 wird quer zur Fahrtrichtung F gesehen von der Entfernung von dem höchsten Ende der Haltevorrichtung 4 zu Befestigungsrahmenteilen 27, 28 der Stehvorrichtung 2 gebildet.

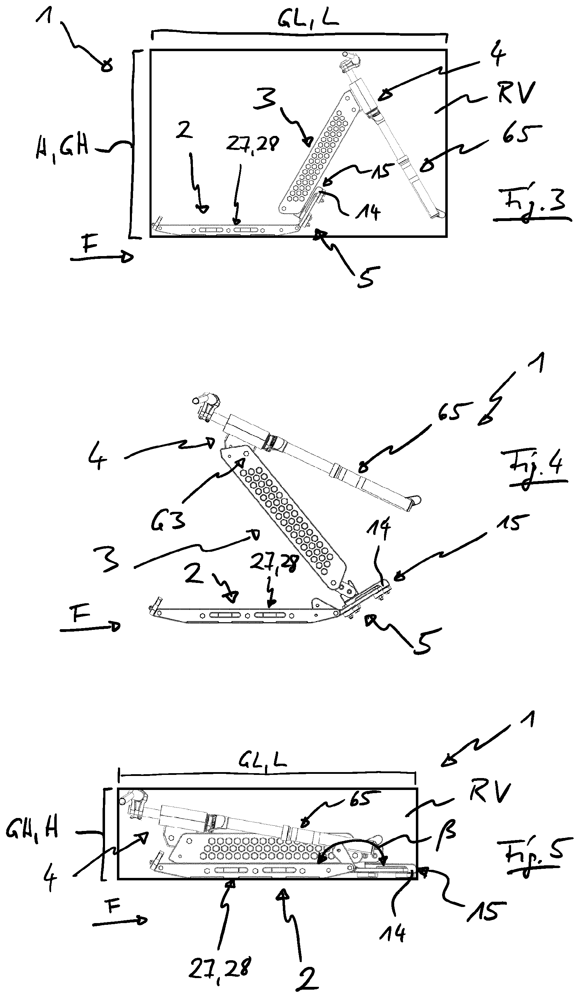

Was oben genannte klappbare Ausbildung nun konkret bedeutet, zeigen die Figuren 3 bis 8.

Dabei zeigt Figur 3 eine Seitenansicht des Ski-Wintersportgeräts aus Figur 1 in einem Betriebszustand, Figur 4 eine Seitenansicht des Ski-Wintersportgeräts aus Figur 1 beim Übergang vom Betriebszustand aus Figur 1 in einen Transportzustand, und Figur 5 eine Seitenansicht des Ski-Wintersportgeräts aus Figur 1 in einem Transportzustand.

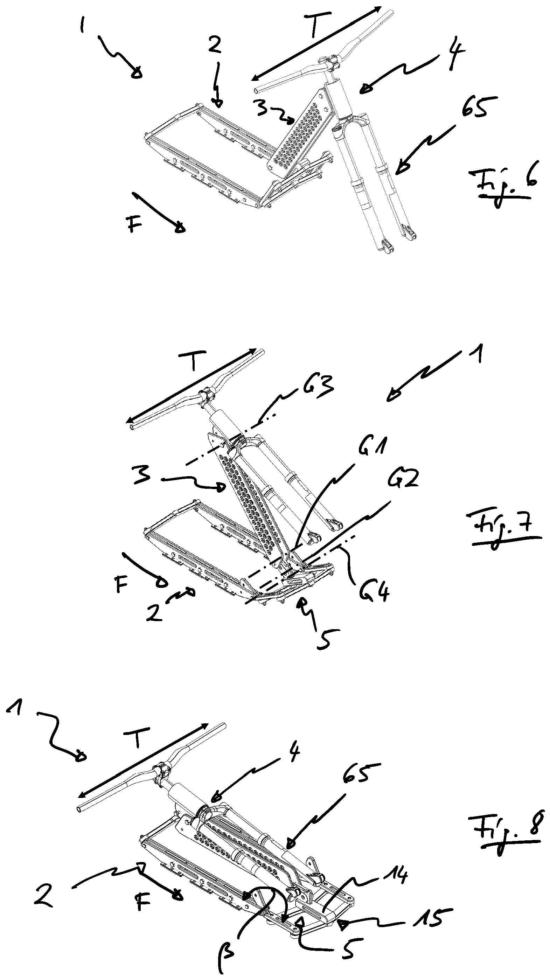

Figuren 6 bis 8 zeigen eine räumliche Ansicht auf das Ski-Wintersportgerät aus den Figuren 3, 4 bzw. 5 in verschiedenen Zuständen.

Genannte Figuren 3 bis 8 zeigen, dass das Ski-Wintersportgerät 1 ausgebildet ist, von einem Transportzustand (vgl. Figuren 5 und 8) in einen Betriebszustand (vgl. Figuren 3 und 6) und umgekehrt transformiert bzw. überführt zu werden, insbesondere werkzeuglos überführt zu werden.

Dabei ist im Transportzustand (vgl. Figuren 5 und 8) das Ski-Wintersportgerät 1 zum Einsatzort transportierbar und im Betriebszustand (vgl. Figuren 3 und 6) zum Hangabwärts-Gleiten einsatzbereit.

Ferner weist das Ski-Wintersportgerät 1 im Betriebszustand (vgl. Figuren 3 und 6) ein im Vergleich zum Transportzustand (vgl. Figuren 5 und 8) größeres Raumvolumen RV, insbesondere eine größere Gesamtlänge GL und Gesamthöhe GH, auf.

Unter dem Begriff "Raumvolumen" wird in der vorliegenden Beschreibung verstanden, dass ein rechteckiger Quader mit einer Höhe H, einer Länge L und einer Tiefe T, über das Ski-Wintersportgerät 1 gestülpt wird. Dabei liegt das Ski-Wintersportgerät 1 an jeder Fläche des Quaders kontaktierend an. Anders ausgedrückt, passt das Ski-Wintersportgerät 1 genau in das Raumvolumen RV des rechteckigen Quaders. Bei diesem rechteckigen Quader kann eine Seitenfläche parallel zur Erdoberfläche bzw. zum Boden ausgerichtet sein.

Das Raumvolumen RV bzw. eine Seitenansicht des rechteckigen Quaders mit einer Höhe H und einer Länge L ist in den Figuren 3 und 5 angedeutet. Die Tiefe des Raumvolumens RV ist aufgrund der gezeigten Seitenansicht nicht dargestellt. Die Tiefe entspricht der Breite des Ski-Wintersportgeräts 1.

Die Tiefe T bzw. Breite ist in den Figuren 6 bis 8 angedeutet.

Wie insbesondere mit Blick auf die Figuren 6 bis 8 erkennbar ist, ist das Ski-Wintersportgerät 1 um die Achsen G1, G2, G3, G4 klappbar, welche senkrecht zur Fahrtrichtung F des Ski-Wintersportgeräts 1 orientiert sind.

Genauer ausgedrückt, sind die Rahmenvorrichtung 3 und die Stehvorrichtung 2 um die horizontal liegenden Achsen G1, G2, G3, G4 klappbar und bewegbar, die quer zur Fahrtrichtung F ausgerichtet ist.

Ferner ist die Rahmenvorrichtung 3 und die Haltevorrichtung 4 um eine horizontal liegende Achse G3 klappbar und bewegbar, die ebenfalls quer zur Fahrtrichtung F ausgerichtet ist.

Zusammengefasst kann festgehalten werden, dass die Achsen G1, G2, G3, G4 parallel zueinander ausgerichtet sind, sodass im Ergebnis das Ski-Wintersportgerät 1 um eine horizontal liegende Achse G klappbar und bewegbar, die quer zur Fahrtrichtung F ausgerichtet ist.

Mit anderen Worten geschildert, sind im Transportzustand (vgl. Figuren 5 und 8) die Rahmenvorrichtung 3 und die Stehvorrichtung 2, ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegbar.

Gleiches gilt für die Rahmenvorrichtung 3 und die Haltevorrichtung 4, die ebenfalls, ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegbar sind.

So ist also im Transportzustand (vgl. Figuren 5 und 8) die Rahmenvorrichtung 2 in Richtung der Stehvorrichtung 2 oder umgekehrt geklappt bzw. klappbar, sodass das Raumvolumen RV, insbesondere die Gesamtlänge GL und die Gesamthöhe GH, des Ski-Wintersportgeräts 1 im Vergleich zum Betriebszustand (vgl. Figuren 3 und 6) verkleinert ist.

Des Weiteren ist im Transportzustand (vgl. Figuren 5 und 8) die Haltevorrichtung 4 in Richtung der Rahmenvorrichtung 3 oder umgekehrt geklappt bzw. klappbar, sodass das Raumvolumen RV, insbesondere die Gesamtlänge GL und die Gesamthöhe GH, des Ski-Wintersportgeräts 1 im Vergleich zum Betriebszustand (vgl. Figuren 3 und 6) verkleinert ist.

Bezogen auf Figur 5, welche den Transportzustand zeigt, wird die Gesamtlänge GL des Ski-Wintersportgeräts 1 in Fahrtrichtung F gesehen wie folgt gebildet; und zwar von dem Ende der Haltevorrichtung 4, das entgegen der Fahrtrichtung F gesehen das im Betriebszustand hinterste Ende der Stehvorrichtung 2, insbesondere das hintere Ende von Befestigungsrahmenteilen 27, 28, überragt, zu einem oberen Ende 15 eines Neigeteils 14 einer ersten Verbindungsvorrichtung 5, die die Rahmenvorrichtung 3 mit der Stehvorrichtung 2 relativ bewegbar zueinander verbindet, gebildet.

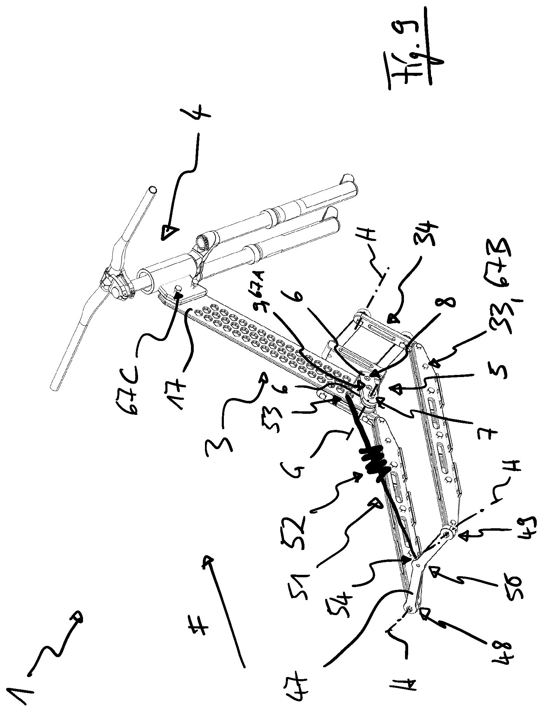

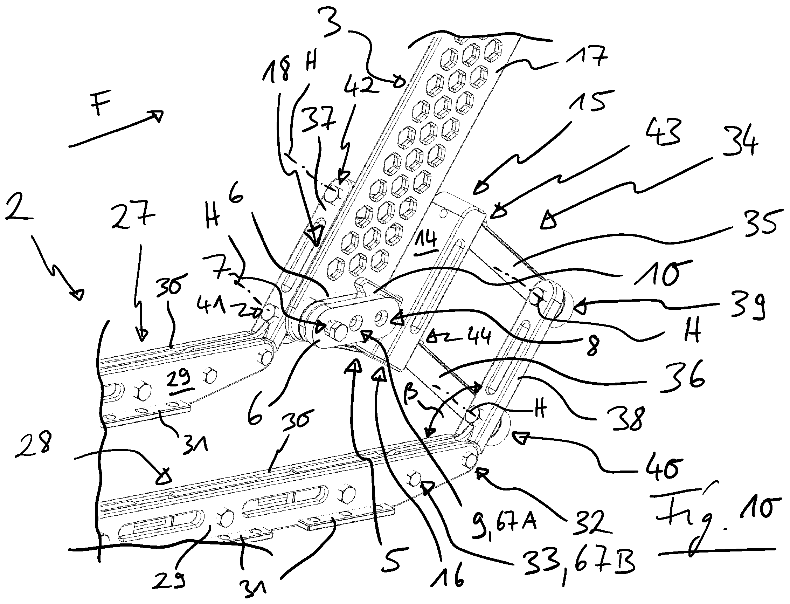

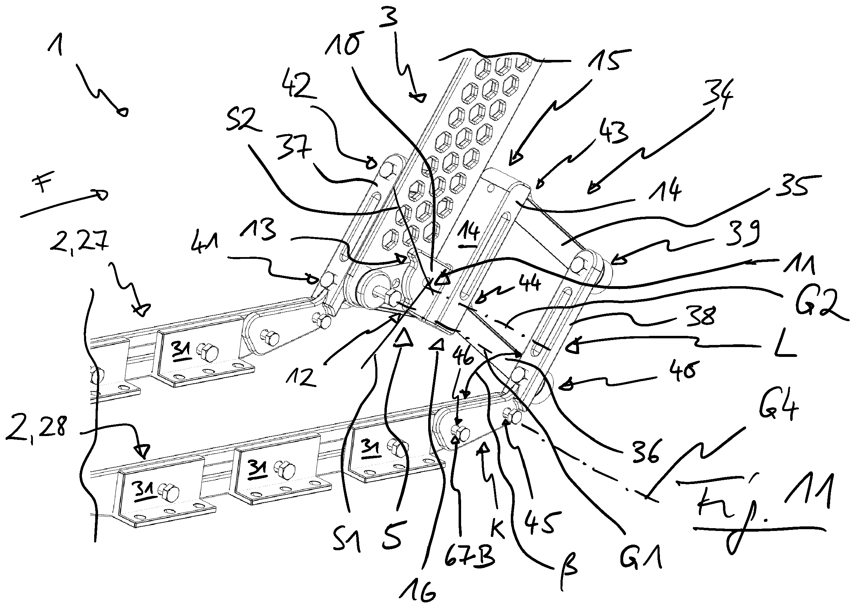

Figur 9 zeigt eine weitere räumliche Ansicht auf das Ski-Wintersportgerät 1 aus Figur 1, allerdings mit nur einem Rahmenbauteil 17. Figur 10 hingegen zeigt eine vergrößerte Ansicht aus Figur 9, wobei Figur 11 dieselbe Ansicht wie Figur 10 mit weiteren nicht dargestellten Elementen zeigt, um die Beschreibung zu erleichtern und die Übersicht zu erhöhen.

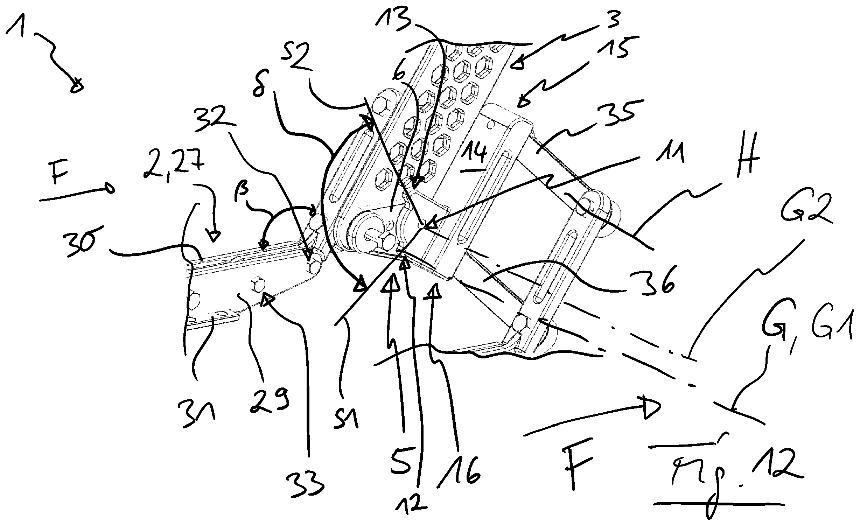

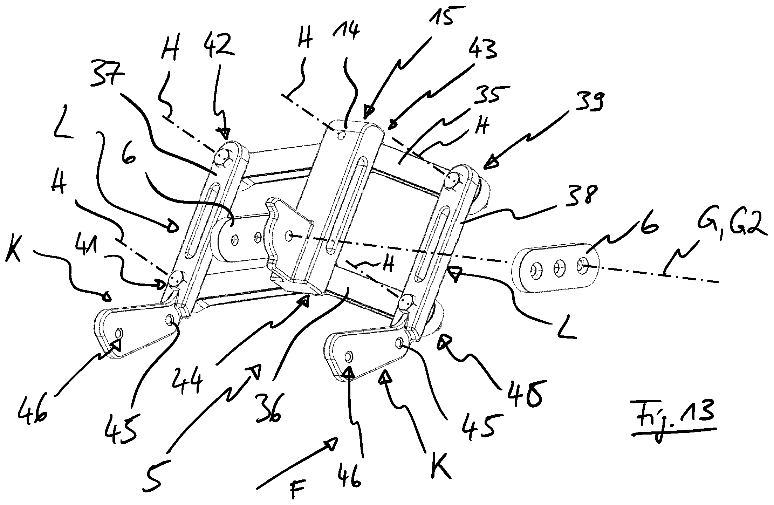

In Figur 12 ist eine vergrößerte Ansicht aus Figur 10, dargestellt, wobei Figur 13 dieselbe Ansicht wie Figur 12 jedoch mit weiteren nicht dargestellten Elementen zeigt.

Der Einfachheit und Kürze halber werden die vorgenannten Figuren 9 bis 13 gemeinsam beschrieben, wobei betreffend besondere Details auf die jeweilige Figur verwiesen wird, welche die beschriebenen Merkmale erkennbar gut darstellt.

Wie in den Figuren 9 bis 13, aber auch in den Figuren 1 bis 8, gezeigt, hat das Ski-Wintersportgerät 1 eine erste Verbindungsvorrichtung 5, die die Rahmenvorrichtung 3 mit der Stehvorrichtung 2 relativ bewegbar zueinander verbindet.

Die erste Verbindungsvorrichtung 5 ist ausgebildet, eine relative Bewegung der Rahmenvorrichtung 3 und der Stehvorrichtung 2 zueinander zu ermöglichen, insbesondere zu vergrößern und/oder zu verkleinern, aber insbesondere nicht zu unterbinden.

Auch verbindet die erste Verbindungsvorrichtung 5 die Rahmenvorrichtung 3 und die Stehvorrichtung 2 gelenkig miteinander, wobei die Rahmenvorrichtung 3 und die Stehvorrichtung 2 eben über die erste Verbindungsvorrichtung 5 miteinander verbunden sind.

Dabei ist die erste Verbindungsvorrichtung 5 ausgebildet, im Betriebszustand (vgl. Figur 9), in welchem das Ski-Wintersportgerät 1 zum Hangabwärts-Gleiten einsatzbereit ist, die relative Bewegung der Rahmenvorrichtung 3 und der Stehvorrichtung 2 so zueinander einzuschränken, dass diese in einem eingeschränkten Winkelbereich relativ zueinander bewegbar sind und somit ein sicheres Gleiten hangabwärts gewährleisten.

Dabei gestattet der eingeschränkte Winkelbereich eine Drehbewegung zwischen 15 und 30 Grad von einem Rahmenbauteil 17 der Rahmenvorrichtung 3 zu einem Rahmenelement 29, 30 der Stehvorrichtung 2 oder zu einem Befestigungsrahmenteil 27, 28 der Stehvorrichtung 2.

Des Weiteren ist die erste Verbindungsvorrichtung 5 ausgebildet, im Transportzustand, in welchem das Ski-Wintersportgerät 1 zum Einsatzort transportierbar ist (vgl. Figuren 5 und 8), die relative Bewegung der Rahmenvorrichtung 3 und der Stehvorrichtung 2 so zu vergrößern, dass durch Klappen der Rahmenvorrichtung 3 und der Stehvorrichtung 2 zueinander, insbesondere in Fahrtrichtung F gesehen, das Raumvolumen RV des Ski-Wintersportgeräts 1, insbesondere die Gesamtlänge GL und die Gesamthöhe GH des Ski-Wintersportgeräts 1, im Vergleich zum Betriebszustand (vgl. Figuren 3 und 6) verkleinerbar ist.

Auch ist die erste Verbindungsvorrichtung 5 an der Rahmenvorrichtung 3 und an der Stehvorrichtung 2 angeordnet.

Dabei ist die erste Verbindungsvorrichtung 5 ausgebildet, die Rahmenvorrichtung 3 und die Stehvorrichtung 2 um die horizontal liegenden Achsen G1 und G2 zu klappen oder zu bewegen, die quer zur Fahrtrichtung F ausgerichtet sind.

Ferner ist im Transportzustand (vgl. Figuren 5 und 8) eine relative Bewegung der Rahmenvorrichtung 3 hin zur Stehvorrichtung 2 mithilfe der ersten Verbindungsvorrichtung 5 derart vergrößerbar, dass die Rahmenvorrichtung 3 und die Stehvorrichtung 2, ähnlich wie drehbar miteinander verbundene Hebel einer schließenden Schere oder ähnlich einem klappbaren Messer eines Taschenmessers, klappbar ausgebildet sind. Dadurch ist das benötigte Raumvolumen RV des Ski-Wintersportgeräts 1, insbesondere die Gesamthöhe GH und die Gesamtlänge GL des Ski-Wintersportgeräts 1, im Vergleich zum Betriebszustand reduzierbar (vgl. Figuren 5, 8 mit Figuren 3, 6).

Im Betriebszustand hingegen (vgl. Figuren 9 bis 13 und 3, 6) ist eine relative Bewegung der Rahmenvorrichtung 3 hin zur Stehvorrichtung 2 mithilfe der ersten Verbindungsvorrichtung 5 derart verkleinert, dass die erste Verbindungsvorrichtung 5 ein Klappen unterbindet, wobei jedoch ein sicheres Gleiten hangabwärts sichergestellt ist.

So ist also im Betriebszustand eine relative Bewegung der Rahmenvorrichtung 3 hin zur Stehvorrichtung 2 mithilfe der ersten Verbindungsvorrichtung 5 derart verkleinert, dass eine Bewegung der Rahmenvorrichtung 3 relativ zur Stehvorrichtung 2 über die erste Verbindungsvorrichtung 5 zumindest größtenteils, insbesondere auf einen eingeschränkten Winkelbereich, beschränkbar ist.

Wie bereits erwähnt, gestattet der eingeschränkte Winkelbereich eine Drehbewegung zwischen 15 und 30 Grad, von der Rahmenvorrichtung 3 zu der Stehvorrichtung 2 oder zu einem Befestigungsrahmenteil 27, 28 der Stehvorrichtung 2.

Auch ist die erste Verbindungsvorrichtung 5 ausgebildet, ein Bewegen oder Klappen der Rahmenvorrichtung 3 relativ zur Stehvorrichtung 2 zu zulassen.

Zur Realisierung der vorgenannten Funktionen hat die erste Verbindungsvorrichtung 5 zwei erste Verbindungselemente 6 mit jeweils einer ersten Drehstelle 7, ausbildbar zu einem Drehgelenk, an welcher die Rahmenvorrichtung 3, insbesondere im Transportzustand, drehbar befestigt ist (vgl. Figur 9 und 10).

Zudem hat die erste Verbindungsvorrichtung 5 bzw. deren zwei erste Verbindungselemente 6 eine zweite Drehstelle 8, ausbildbar zu einem Drehgelenk, an welcher die ersten Verbindungselemente 6 mit einem zweiten Verbindungselement 10 der ersten Verbindungsvorrichtung 5 drehbar befestigt sind (vgl. Figur 9 und 10).

Hierbei sind die erste und zweite Drehstelle 7, 8 an entgegengesetzten Enden des jeweiligen ersten Verbindungselements 6 angeordnet und bilden einen Teil eines Drehgelenks.

Wie den Figuren 9 und 10 zu entnehmen sind die ersten Verbindungselemente 6 aus einem Blech gebildet, dessen Breite und Länge sehr viel größer sind als dessen Dicke, wobei jedes Verbindungselement 6 mittels eines Stanzverfahrens, eines Laserschneidverfahrens, eines Fräsverfahrens und/oder Schneidverfahrens erstellt worden ist.

Des Weiteren hat jedes erste Verbindungselement 6 zwischen der ersten und zweiten Drehstelle 7, 8 eine Verbindungsstelle 9 zur Rahmenvorrichtung 3 (vgl. Figur 9 und 10), um mithilfe einer werkzeuglosen, zerstörungsfreien, lösbar befestigbaren Schnellverbindungseinrichtung 67A (nicht dargestellt, nur deren Anbringungsort) die relative Bewegung zwischen Rahmenvorrichtung 3 und erstem Verbindungselement 6 um die erste Drehstelle 7 zu unterbinden.

Die Verbindungsstelle 9 ist für eine werkzeuglose, zerstörungsfreie, lösbar befestigbare Schnellverbindungseinrichtung 67A als Durchführung durch das erste Verbindungselement 6 ausgebildet.

Auch ist die Verbindungsstelle 9 auf eine werkzeuglose, zerstörungsfreie, lösbar befestigbare Schnellverbindungseinrichtung 67A hinsichtlich Form und Passung, insbesondere ausgebildet als Spiel- oder Übergangspassung, angepasst.

So verbindet im Betriebszustand die Schnellverbindungseinrichtung 67A die erste Verbindungsvorrichtung 5 mit der Rahmenvorrichtung 3 beweglich, wobei im Transportzustand nach Lösen der Schnellverbindungseinrichtung 67A eine Verbindung zwischen der ersten Verbindungsvorrichtung 5 und der Rahmenvorrichtung 3 gelöst ist und eine weitere Verbindung besteht. Im Ergebnis bildet im Transportzustand die Drehstelle 7, an welcher die Rahmenbauteile 17 der Rahmenvorrichtung 3 drehbar angeordnet sind, einen Drehpunkt, um welchen Rahmenbauteile 17 und die ersten Verbindungselemente 6 drehen können.

Wie die Figuren 9 bis 13 zudem zeigen, hat die erste Verbindungsvorrichtung 5 ein zweites Verbindungselement 10 mit einer Drehstelle 11, ausbildbar zu einem Drehgelenk (vgl. insbesondere Figuren 10 und 11).

An der Drehstelle 11 ist ein erstes Verbindungselement 6 der ersten Verbindungsvorrichtung 5 drehbar befestigt. Die Drehstelle 11 des zweiten Verbindungselements 10 ist drehbar mit der zweiten Drehstelle 8 der ersten Verbindungselemente 6 verbunden, um ein Drehgelenk zu bilden.

Dabei ist die Drehstelle 11 innerhalb des zweiten Verbindungselements 10 angeordnet, wobei das zweite Verbindungselement 10 einen ersten und einen zweiten Anschlag 12, 13 für eine werkzeuglose, zerstörungsfrei lösbar befestigbare Schnellverbindungseinrichtung 67A umfasst (vgl. Figuren 11 und 12).

Des Weiteren sind der erste und zweite Anschlag 12, 13 voneinander beabstandet, um eine relative Bewegung der ersten Verbindungselemente 6 der ersten Verbindungsvorrichtung 5 zum zweiten Verbindungselement 10 zu begrenzen.

Wie in Figur 12 zu erkennen, schließen ein erster Schenkel S1, gebildet von einer Linie zwischen dem ersten Anschlag 12 und der Drehstelle 11 des zweiten Verbindungselements 10, und ein zweiter Schenkel S2, gebildet von einer Linie zwischen dem zweiten Anschlag 13 und der Drehstelle 11 des zweiten Verbindungselements 10, einen Winkel δ von 100 Grad ein.

Wie Figuren 11 und 12 zeigen, ist jeder Anschlag 12, 13 als Nase ausgebildet, die von dem zweiten Verbindungselement 10 hervorspringt.

Jeder Anschlag 12, 13 ist hinsichtlich seiner Form auf eine werkzeuglose, zerstörungsfrei lösbar befestigbare Schnellverbindungseinrichtung 67A (nicht dargestellt) angepasst, um ein zerstörungsfreies Anschlagen zu gewährleisten.

Das zweite Verbindungselement 10 hat zudem, wie Figuren 11 und 12 zeigen, zwischen dem ersten und zweiten Anschlag 12, 13 eine gekrümmte Bahn bzw. ist scheibenförmig ausgebildet.

Wie bereits angedeutet, hat die erste Verbindungsvorrichtung 5 eine werkzeuglose, zerstörungsfrei lösbar befestigbare Schnellverbindungseinrichtung 67A (nicht dargestellt) zum Anschlagen an den Anschlägen 12, 13 des zweiten Verbindungselements 10 und zum Begrenzen einer relativen Bewegung zwischen dem ersten und zweiten Verbindungselement 6, 10 der ersten Verbindungsvorrichtung 5.

Dabei ist die Schnellverbindungseinrichtung 67A (nicht dargestellt) ausgebildet, die ersten Verbindungselemente 6 mit der Rahmenvorrichtung 3 zu verbinden, insbesondere die ersten Verbindungselemente 6 werkzeuglos und zerstörungsfrei lösbar an der Rahmenvorrichtung 3 zu befestigen.

Hierbei ist die Schnellverbindungseinrichtung 67A (nicht dargestellt) an die Verbindungsstelle 9 des ersten Verbindungselements 6 der ersten Verbindungsvorrichtung 5 hinsichtlich Form und Passung, insbesondere ausgebildet als Spiel- oder Übergangspassung, angepasst.

Im Betriebszustand ist die Schnellverbindungseinrichtung 67A (nicht dargestellt) in der Verbindungsstelle 9 des ersten Verbindungselements 6 angeordnet, um eine Drehung der ersten Verbindungselemente 6 relativ zur Rahmenvorrichtung 3 um die erste Drehstelle 7 des ersten Verbindungselements 6 zu unterbinden.

Im Transportzustand hingegen ist die Schnellverbindungseinrichtung 67A (nicht dargestellt) aus der Verbindungsstelle 9 der ersten Verbindungselemente 6 entfernt, sodass eine Drehung der ersten Verbindungselemente 6 relativ zur Rahmenvorrichtung 3 um die erste Drehstelle 7 der ersten Verbindungselemente 6 möglich ist.

Ferner hat die erste Verbindungsvorrichtung 5, wie in den Figuren 10 bis 12, ein Neigeteil 14, welches ausgebildet ist, sich entsprechend der Neigung der Stehvorrichtung 2, insbesondere deren zwei anordenbare Skier A, B bzw. der Neigung der Befestigungsrahmenteile 27, 28 der Stehvorrichtung 2, quer zu einer Fahrtrichtung F zu neigen.

So hat also die erste Verbindungsvorrichtung 5 ein Neigeteil 14, welches mit einer Parallelogrammführung 34 verbunden ist, sodass die Neigung der Stehvorrichtung 2, insbesondere deren zwei anordenbare Skier A, B bzw. Befestigungsrahmenteile 27, 28, quer zur Fahrtrichtung F auf das Neigeteil 14 übertragbar oder mit dem Neigeteil 14 synchronisierbar ist.

Das Neigeteil 14 hat ein oberes 15 und ein unteres Ende 16, wobei am unteren Ende das zweite Verbindungselement 10 der ersten Verbindungsvorrichtung 5 drehbar oder starr befestigt ist.

Das untere und das obere Ende 15, 16 sind jeweils mit einer ersten und mit einer zweiten Komponente 35, 36 einer Parallelogrammführung 34 drehbar verbunden.

Die zweite Komponente 36 der Parallelogrammführung 34 ist am unteren Ende 16 mit der ersten Komponente 35 der Parallelogrammführung 34 am oberen Ende 15 parallel ausgerichtet.

Das Neigeteil 14 der ersten Verbindungsvorrichtung 5 und das zweite Verbindungselement 10 der ersten Verbindungsvorrichtung 5 sind einteilig oder einstückig bzw. aus einem Teil ausgebildet.

Zusammenfassend kann für die Figuren 1 bis 12 festgehalten werden, dass in einem Betriebszustand die Rahmenvorrichtung 3 und die Stehvorrichtung 2 in einem eingeschränkten Winkelbereich relativ zueinander bewegbar sind. Dabei ist die Rahmenvorrichtung 3 in einem eingeschränkten Winkelbereich relativ bewegbar zur Stehvorrichtung 2 ausgebildet, sodass Unebenheiten der Skipiste beim Hangabwärts-Gleiten von der relativen Bewegung der Rahmenvorrichtung 3 und der Stehvorrichtung 2 im Rahmen des eingeschränkten Winkelbereichs kompensierbar sind.

Ferner kann zusammengefasst werden, dass das Ski-Wintersportgerät 1 so ausgebildet ist, dass die Rahmenvorrichtung 3 und die Stehvorrichtung 2 nach dem werkzeuglosen, und zerstörungsfreien Lösen einer Schnellverbindungseinrichtung 67A einer ersten Verbindungsvorrichtung 5 über einen eingeschränkten Winkelbereich hinaus drehbar miteinander verbunden bleiben. Somit ist das Ski-Wintersportgerät 1 durch ein Bewegen der Rahmenvorrichtung 3 relativ zur Stehvorrichtung 2 vom Betriebszustand in den Transportzustand und umgekehrt überführbar.

Nochmals mit anderen Worten ausgedrückt, ist das Ski-Wintersportgerät 1 im Betriebszustand so ausgebildet, dass die Rahmenvorrichtung 3 und die Stehvorrichtung 2 nach dem werkzeuglosen und lösbaren Installieren einer Schnellverbindungseinrichtung 67A einer ersten Verbindungsvorrichtung 5 in einem eingeschränkten Winkelbereich drehbar miteinander verbunden sind. Somit sind durch Bewegen der Rahmenvorrichtung 3 relativ zur Stehvorrichtung 2 Unebenheiten der Skipiste beim Hangabwärts-Gleiten von der relativen Bewegung der Rahmenvorrichtung 3 und der Stehvorrichtung 2 im Rahmen des eingeschränkten Winkelbereichs kompensierbar, wobei ein Überführen vom Betriebszustand in den Transportzustand und umgekehrt durch Bewegen der Rahmenvorrichtung 3 relativ zur Stehvorrichtung 2 nicht möglich ist.

Wie bereits erwähnt, gestattet der eingeschränkte Winkelbereich eine relative Drehbewegung zwischen 15 und 30 Grad, von einem Rahmenbauteil 17 der Rahmenvorrichtung 3 zu einem Rahmenelement 29, 30 der Stehvorrichtung 2 oder zu einem Befestigungsrahmenteil 27, 28 der Stehvorrichtung 2.

Dabei ist das Ski-Wintersportgerät 1 so ausgebildet ist, dass die Rahmenvorrichtung 3 und die Stehvorrichtung 2 zusammen im Betriebszustand eine L-Form, ähnlich einem Eishockeyschläger, aufweisen. So können also die Rahmenvorrichtung 3 und die Stehvorrichtung 2 zusammen im Betriebszustand einen Winkel zwischen 100 und 150 Grad einschließen. Ein derartiger Winkel ermöglicht eine ergonomische Haltung auf dem Ski-Wintersportgerät.

Ferner hat, wie in den Figuren 10 bis 13 zu erkennen, die Stehvorrichtung 2 eine Parallelogrammführung 34, welche die Neigung der Befestigungsrahmenteile 27, 28 und somit optionaler, zugehöriger Skier A, B quer zu einer Fahrtrichtung F synchronisiert.

Die Parallelogrammführung 34 ist ein Parallelkurbel-Getriebe oder ein Getriebe einer Viergelenkkette, dessen jeweils gegenüberliegende Glieder gleich lang sind.

Auch weist die Parallelogrammführung 34 bzw. deren einzelne Teile eine Gestalt ähnlich einem Blech auf, dessen Breite und Länge sehr viel größer sind als dessen Dicke, wobei die Parallelogrammführung 34, insbesondere deren Komponenten 35, 36, 37, 38 mittels eines Stanzverfahrens, eines Laserschneidverfahrens, eines Fräsverfahrens und/oder Schneidverfahrens erstellt worden ist.

Des Weiteren hat die Parallelogrammführung 34 vier Komponenten 35, 36, 37, 38, wie in Figur 13 besonders gut zu erkennen, wobei eine erste und zweite Komponente 35, 36 parallel zueinander, horizontal angeordnet und quer zur Fahrtrichtung F ausgerichtet sind.

Wie in Figuren 10 bis 13 gezeigt, ist mittig, an der ersten und zweiten Komponente 35, 36 das Neigeteil 14 der ersten Verbindungsvorrichtung 5 angeordnet.

Die erste und zweite Komponente 35, 36 der Parallelogrammführung 34 haben jeweils zwei Schenkel, die gegeneinander geneigt sind und somit eine V-Form bilden.

Mittig an der ersten und zweiten Komponente 35, 36, insbesondere am Übergang von dem einen Schenkel der V-Form zum anderen Schenkel, ist das Neigeteil 14 der ersten Verbindungsvorrichtung 5 drehbar befestigt.

Die erste und zweite Komponente 35, 36 bilden an ihren Enden jeweils mit einer dritten bzw. vierten Komponente 37, 38 der Parallelogrammführung 34 ein Drehgelenk 39, 40, 41, 42, wobei die Drehachse H der Drehgelenke 39, 40, 41, 42 in Fahrtrichtung F orientiert und gegen die Erdoberfläche, ähnlich einem Heckspoiler eines Rennwagens, geneigt ist.

Die erste und zweite Komponente 35, 36 bilden jeweils mit dem Neigeteil 14 ein Drehgelenk 43, 44, dessen Drehachse H ebenfalls in Fahrtrichtung F orientiert und gegen die Erdoberfläche, ähnlich einem Heckspoiler eines Rennwagens, geneigt ist.

Ferner hat die Parallelogrammführung 34, wie bereits erwähnt, eine dritte und vierte Komponente 37, 38, die parallel zueinander und in Fahrtrichtung F ausgerichtet sind.

Wie weiter unten noch genauer erläutert wird, weist die Stehvorrichtung 2 ein erstes und ein zweites Befestigungsrahmenteil 27, 28 jeweils zur Anordnung einer Fußaufnahmevorrichtung 55 und eines Skis A, B auf.

Die zwei Befestigungsrahmenteile 27, 28 umfassen dabei jeweils zwei Rahmenelemente 29, 30, an welchen ein Verbindungsbauteil 31 für eine Fußaufnahmevorrichtung 55 und für einen Ski A, B befestigt ist.

Betreffend die Parallelogrammführung 34 ist festzuhalten, dass nun deren dritte Komponente 37 an dem ersten Befestigungsrahmenteil 27, insbesondere an dessen Rahmenelementen 29, 30, und die vierte Komponente 38 an dem zweiten Befestigungsrahmenteil 28, insbesondere an dessen Rahmenelementen 29, 30, drehbar angeordnet ist.

Wie insbesondere in den Figuren 11 und 13 gezeigt, haben die dritte und vierte Komponente 37, 38 der Parallelogrammführung 34 eine L-Form, ähnlich einem Eishockeyschläger.

Dabei hat die L-Form einen kurzen K und einen langen Schenkel L, wobei der kurze Schenkel K jeweils an den genannten Befestigungsrahmenteilen 27, 28, insbesondere an deren Rahmenelementen 29, 30, drehbar angeordnet ist.

Der kurze Schenkel K hat ein erstes Ende und ein zweites Ende, wobei am zweiten Ende der lange Schenkel L angeordnet ist.

Auch ist am zweiten Ende eine Rotationsstelle 45, ausbildbar zu einem Drehgelenk, ausgebildet, an welcher die dritte bzw. vierte Komponente 37, 38 drehbar am entsprechenden Befestigungsrahmenteil 27, 28, insbesondere an dessen Rahmenelementen 29, 30, angeordnet ist (vgl. Figuren 3 bis 8 und 11, 13).

Die Rotationsstelle 45 am zweiten Ende und eine entsprechende Rotationsstelle 32 der Befestigungsrahmenteile 27, 28, insbesondere die Rotationsstelle 32 der Rahmenelemente 29, 30, bilden ein Drehgelenk.

Der kurze Schenkel K ist zwischen den zwei Rahmenelementen 29, 30 des ersten bzw. zweiten Befestigungsrahmenteils 27, 28 drehbar angeordnet.

Am ersten Ende des kurzen Schenkels K ist eine Schnellverbindungsstelle 46 zum entsprechenden Befestigungsrahmenteil 27, 28, insbesondere zu dessen Rahmenelementen 29, 30, angeordnet. Somit kann mithilfe einer werkzeuglosen, zerstörungsfrei lösbar befestigbaren Schnellverbindungseinrichtung 67B die relative Bewegung von dritter bzw. vierter Komponente 37, 38 der Parallelogrammführung 34 zum Befestigungsrahmenteil 27, 28 unterbunden werden.

Die Schnellverbindungsstelle 46 ist für eine werkzeuglose, zerstörungsfrei lösbar befestigbare Schnellverbindungseinrichtung 67B jeweils als Durchführung durch die dritte oder vierte Komponente 37, 38, insbesondere durch deren kurzen Schenkel K, ausgebildet.

Ferner ist die Schnellverbindungsstelle 46 auf eine werkzeuglose, zerstörungsfrei lösbar befestigbare Schnellverbindungseinrichtung 67B hinsichtlich Form und Passung, insbesondere ausgebildet als Spiel- oder Übergangspassung, angepasst.

Am langen Schenkel L der dritten und vierten Komponente 37, 38 der Parallelogrammführung 34 sind deren erste und zweite Komponente 35, 36 im Abstand zueinander angeordnet (vgl. Figuren 10 bis 13).

So sind am langen Schenkel L die erste und zweite Komponente 35, 36 drehbar angeordnet, wobei die erste und zweite Komponente 35, 36 an den Enden des langen Schenkels L der dritten und vierten Komponente 37, 38 der Parallelogrammführung 34 drehbar angeordnet sind.

Der kurze und der lange Schenkel K, L weisen eine Gestalt ähnlich einem Blech auf, dessen Breite und Länge sehr viel größer sind als dessen Dicke, wobei die dritte und vierte Komponente 37, 38 mittels eines Stanzverfahrens, eines Laserschneidverfahrens, eines Fräsverfahrens und/oder Schneidverfahrens erstellt worden sind.

Der kurze und der lange Schenkel K, L sind, wie Figur 13 zeigt, um 90 Grad zueinander verdreht und aneinander angeordnet, wobei die dritte und vierte Komponente 37, 38, insbesondere deren kurzer und langer Schenkel K, L, einteilig ausgebildet sind.

Des Weiteren zeigen die Figuren 10 bis 13 und 3, 6, dass im Betriebszustand, in welchem das Ski-Wintersportgerät 1 zum Hangabwärts-Gleiten einsatzbereit ist, die relative Bewegung der dritten und vierten Komponente 37, 38 der Parallelogrammführung 34 zu den Befestigungsrahmenteilen 27, 28 unterbunden ist und somit ein sicheres Gleiten hangabwärts gewährleistet ist.

Ferner ist im Transportzustand, in welchem das Ski-Wintersportgerät 1 zum Einsatzort transportierbar ist, die relative Bewegung des entsprechenden Befestigungsrahmenteils 27, 28 zur dritten oder vierten Komponente 37, 38 der Parallelogrammführung 34 gestattet, sodass durch Drehen der dritten und vierten Komponente 37, 38 und des Befestigungsrahmenteils 27, 28 zueinander, insbesondere in Fahrtrichtung F gesehen, das Raumvolumen RV des Ski-Wintersportgeräts 1, insbesondere die Gesamthöhe GH und die Gesamtlänge GL des Ski-Wintersportgeräts 1, im Vergleich zum Betriebszustand verkleinerbar ist (vgl. Figuren 3, 6 mit 5, 8).

Wie in Figuren 10, 12 und 13 gezeigt, ist im Betriebszustand der Winkel β zwischen der dritten oder vierten Komponente 37, 39 der Parallelogrammführung 34, insbesondere deren langem Schenkel L, und dem zugehörigen Befestigungsrahmenteil 27, 28, insbesondere zu dessen Rahmenelementen 29, 30, unveränderbar.

Hingegen ist im Transportzustand (vgl. Figuren 5 und 8) der Winkel β zwischen der dritten und vierten Komponente 37, 38, insbesondere deren langem Schenkel L, und dem zugehörigen Befestigungsrahmenteil 27, 28, insbesondere zu dessen Rahmenelementen 29, 30, veränderbar.

So schließen im Betriebszustand die dritte und vierte Komponente 37, 38 bzw. deren langer Schenkel L, mit dem zugehörigen Befestigungsrahmenteil 27, 28 den Winkel β von 120 Grad ein (vgl. Figuren 10, 12 und 13).

Im Transportzustand hingegen schließt die dritte oder vierte Komponente 37, 38 bzw. deren langer Schenkel L mit dem zugehörigen Befestigungsrahmenteil 27, 28 einen Winkel β von 180 Grad ein (vgl. Figuren 5 und 8).

So ist also im Transportzustand zur Verkleinerung des Raumvolumens RV des Ski-Wintersportgeräts 1 die dritte und vierte Komponente 37, 38 der Parallelogrammführung 34 mit den Befestigungsrahmenteilen 27, 28 drehbar verbunden.

Die Rotationsstelle 45 am zweiten Ende der dritten und vierten Komponente 37, 38 der Parallelogrammführung 34 und die Rotationsstelle 32 der Befestigungsrahmenteile 27, 28, insbesondere die Rotationsstelle 32 der Rahmenelemente 29, 30, bilden ein Drehgelenk.

Im Transportzustand - wie in Figuren 5 und 8 gezeigt - ist die dritte und vierte Komponente 37, 38 in eine Linie bzw. entlang einer Richtung mit dem Befestigungsrahmenteil 27, 28 geklappt, sodass der lange Schenkel L der dritten und vierten Komponente 37, 38 in Verlängerung des Befestigungsrahmenteils 27, 28 angeordnet ist. Dadurch ist das Raumvolumen RV, insbesondere die Gesamthöhe GH und die Gesamtlänge GL, des Ski-Wintersportgeräts 1 im Vergleich zum Betriebszustand verkleinerbar (vgl. Figuren 5 und 8 mit Figuren 3 und 6).

Die dritte und vierte Komponente 37, 38 und das Befestigungsrahmenteil 27, 28 sind klappbar um eine horizontal liegende Achse G4 ausgebildet, die quer zur Fahrtrichtung F ausgerichtet ist.

Wie Figuren 1 bis 9 und 14, welche eine weitere räumliche Ansicht auf das Ski-Wintersportgerät 1 aus Figur 1 darstellt, zeigen, hat die Parallelogrammführung 34 eine fünfte Komponente 47, mit welcher die hinteren Enden, bezogen auf die Fahrtrichtung F des Ski-Wintersportgeräts 1, der zwei Befestigungsrahmenteile 27, 28 gelenkig miteinander verbunden sind.

Die fünfte Komponente 47 hat zwei Schenkel, die gegeneinander geneigt sind, insbesondere eine V-Form bilden.

Mittig an der fünften Komponente 47, insbesondere am Übergang von dem einen Schenkel der V-Form zum anderen Schenkel, ist eine Verbindungseinrichtung 51 zur Verbindung der fünften Komponente 47 mit der Rahmenvorrichtung 3 oder mit der ersten Verbindungsvorrichtung 5 angeordnet. Im vorliegenden Fall ist die fünfte Komponente 47 mit der Rahmenvorrichtung 3 verbunden.

Die fünfte Komponente 47 hat zudem an ihren Enden jeweils eine Drehstelle 48, 49, ausbildbar zu einem Drehgelenk, deren Drehachse H in Fahrtrichtung F orientiert und gegen die Erdoberfläche, ähnlich einem Heckspoiler eines Rennwagens, geneigt ist.

Des Weiteren weist die fünfte Komponente 47 mittig eine Drehstelle 50 für eine Verbindungseinrichtung 51 auf, deren Drehachse H ebenfalls in Fahrtrichtung F orientiert und gegen die Erdoberfläche, ähnlich einem Heckspoiler eines Rennwagens, geneigt ist.

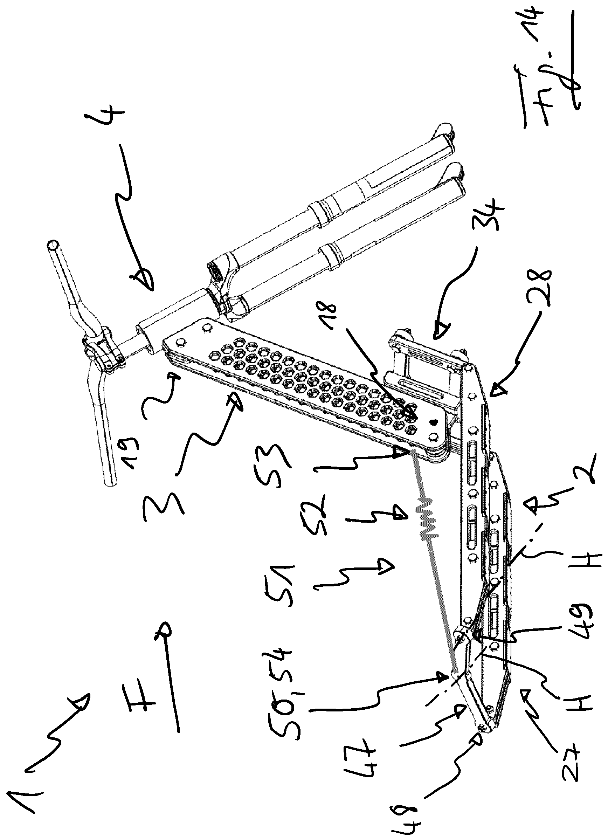

Figuren 9 und 14 zeigen, dass die Stehvorrichtung 2 eine Verbindungseinrichtung 51 aufweist, die der Übersichtlichkeit halber in den anderen Figuren weggelassen wurde.

Die Verbindungseinrichtung 51 verbindet die fünfte Komponente 47 der Parallelogrammführung 34 mit der Rahmenvorrichtung 3.

Dabei hat die Verbindungseinrichtung 51 eine veränderbare Länge bzw. ist teleskopierbar ausgebildet.

Zudem hat die Verbindungseinrichtung 51 einen Energiespeicher 52, wobei der Energiespeicher 52 und die teleskopierbare Ausbildung in einer Linie angeordnet sind.

Die Verbindungseinrichtung 51 ist, wie Figuren 9 und 14 zeigen, über eine werkzeuglose, zerstörungsfrei lösbar befestigbare Schnellverbindungseinrichtung (nicht dargestellt) an der Rahmenvorrichtung 3 werkzeuglos und zerstörungsfrei lösbar befestigbar.

Hierbei nimmt ein erstes Ende 53 der Verbindungseinrichtung 51 die Schnellverbindungseinrichtung (nicht dargestellt) auf, wobei die Verbindungseinrichtung 51 an ihrem ersten Ende 53 eine Durchführung hat, durch welche die Schnellverbindungseinrichtung hindurchführbar ist.

Eine entsprechende Durchführung haben auch die Rahmenbauteile 17 der Rahmenvorrichtung 3, sodass die Schnellverbindungseinrichtung (nicht dargestellt) in die genannten Durchführungen der Rahmenbauteile 17 und der Verbindungseinrichtung 51 einsetzbar ist, um alle miteinander zu verbinden.

Die Durchführung, ausgebildet als Bohrloch, bildet eine Passung mit der Schnellverbindungseinrichtung (nicht dargestellt), insbesondere eine Spiel- oder Übergangspassung.

Auch hat die Verbindungseinrichtung 51 ein zweites Ende 54, das drehbar an einer Drehstelle 50 der fünften Komponente 47 der Parallelogrammführung 34 befestigt ist, um ein Drehgelenk oder eine starre Verbindung zu bilden.

Sowohl die Drehstelle 50 als auch das zweite Ende 54 weisen jeweils eine Durchführung, ausgebildet als Bohrloch, auf bzw. sind als solche ausgebildet, um eine werkzeuglose, zerstörungsfrei lösbar befestigbare Schnellverbindungseinrichtung (nicht dargestellt) aufzunehmen, die die Verbindungseinrichtung 51 und die fünfte Komponente 47 miteinander verbindet.

Die genannten Durchführungen und die nicht dargestellte Schnellverbindungseinrichtung sind hinsichtlich Form und Passung, insbesondere ausgebildet als Spiel- oder Übergangspassung, aufeinander angepasst.

Im Ergebnis kann also die Schnellverbindungseinrichtung am ersten und/oder zweiten Ende 53, 54 gelöst werden, um die Verbindungseinrichtung 51 von der fünften Komponente 47 der Parallelogrammführung 34 und/oder der Rahmenvorrichtung 3 schnell und werkzeuglos sowie zerstörungsfrei zu lösen.

In Figuren 2, 9 bis 11 ist die Stehvorrichtung 2 des Ski-Wintersportgeräts 1, wie weiter oben beschrieben, gezeigt, auf welcher ein Nutzer stehen kann und an welcher ein Ski anordenbar ist.

Die Stehvorrichtung 2 hat zwei Befestigungsrahmenteile 27, 28 zur Anordnung einer Fußaufnahmevorrichtung 55 und eines Skis A, B.

Die zwei Befestigungsrahmenteile 27, 28 weisen dabei jeweils zwei Rahmenelemente 29, 30 auf, an welchen ein Verbindungsbauteil 31 für eine Fußaufnahmevorrichtung 55 und für einen Ski A, B befestigbar ist.

Dabei hat jedes Befestigungsrahmenteil 27, 28 mehrere Verbindungsbauteile 31, welche an den Rahmenelementen 29, 30 und an einem Ski A, B und an einer Fußaufnahmevorrichtung 55 befestigbar sind.

Jedes Verbindungsbauteil 31 weist ein T-Profil auf, das von zwei Flanschen gebildet wird.

An dem einen Flansch des T-Profils, der an dem Ende des anderen Flansches mittig und quer zum anderen Flansch angeordnet ist, ist ein Ski A, B oder eine Fußaufnahmevorrichtung 55 befestigbar.

An dem anderen Flansch des T-Profils, dessen Ende an dem einen Flansch angeordnet ist, sind die Rahmenelemente 29, 30 befestigt.

Jedes Rahmenelement 29, 30 ist aus einem Blech ausgebildet, dessen Breite und Länge sehr viel größer sind als dessen Dicke, wobei jedes Rahmenelement 29, 30 mittels eines Stanzverfahrens, eines Laserschneidverfahrens, eines Fräsverfahrens und/oder Schneidverfahrens erstellt ist.

Ferner sind, wie Figuren 2, 9 bis 11 zeigen, die Rahmenelement 29, 30 an den dritten bzw. vierten Komponente 37, 38 der Parallelogrammführung 34 der Stehvorrichtung 2 drehbar angeordnet.

Die Parallelogrammführung 34 synchronisiert die Neigung der Befestigungsrahmenteile 27, 28 und somit optionaler, zugehöriger Ski A, B quer zur Fahrtrichtung F.

Wie insbesondere in den Figuren 2, 9 bis 11 zu erkennen, hat jedes Befestigungsrahmenteil 27, 28, bezogen auf die Fahrtrichtung F des Ski-Wintersportgeräts 1, ein vorderes und ein hinteres Ende.

Dabei hat jedes Befestigungsrahmenteil 27, 28, insbesondere dessen Rahmenelemente 29, 30, am vorderen Ende eine Rotationsstelle 32, ausbildbar zu einem Drehgelenk. Um die Rotationsstelle 32 sind die dritte bzw. vierte Komponente 37, 38 der Parallelogrammführung 34 der Stehvorrichtung 2 drehbar angeordnet.

Am vorderen Ende ist eine Schnellverbindungsstelle 33, ausbildbar zu einem Drehgelenk, zu der Parallelogrammführung 34, insbesondere deren dritter bzw. vierter Komponente 37, 38, angeordnet. Dadurch kann mithilfe einer werkzeuglosen, zerstörungsfrei lösbar befestigbaren Schnellverbindungseinrichtung 67B die relative Bewegung von dritter und vierter Komponente 37, 38 zum Befestigungsrahmenteil 27, 28 oder zu dessen Rahmenelementen 29, 30 um die Rotationsstelle 32 der Befestigungsrahmenteile 27, 28 unterbunden werden.

Die Schnellverbindungsstelle 33 ist als Durchführung durch die Rahmenelemente 29, 30 ausgebildet, wobei die Schnellverbindungsstelle 33 hinsichtlich Form und Passung, insbesondere ausgebildet als Spiel- oder Übergangspassung, an eine werkzeuglose, zerstörungsfrei lösbar befestigbare Schnellverbindungseinrichtung 67B angepasst ist.

Wie bereits erwähnt, hat jedes Befestigungsrahmenteil 27, 28 zwei Rahmenelemente 29, 30, zwischen denen Verbindungsbauteile 31, insbesondere deren Flansche, angeordnet sind, an welche ein Ski A, B und eine Fußaufnahmevorrichtung 55 befestigbar sind.

Die zwei Rahmenelemente 29, 30 sind so voneinander beabstandet, dass zwischen diesen beiden Verbindungsbauteile 31 und eine dritte bzw. vierte Komponente 37, 38 der Parallelogrammführung 34 anordenbar sind.

Nochmals mit anderen Worten formuliert, hat die Stehvorrichtung 2 zwei Befestigungsrahmenteile 27, 28, insbesondere ein erstes 27 und ein zweites Befestigungsrahmenteil 28, mit jeweils zwei Rahmenelementen 29, 30, zwischen denen jeweils mehrere Verbindungsbauteile 31 und eine dritte oder vierte Komponente 37, 38 der Parallelogrammführung 34 angeordnet ist (vgl. Figuren 2, 9 bis 11). Dabei ist an jedem Verbindungsbauteil 31 ein Ski A, B und eine Fußaufnahmevorrichtung 55 befestigbar.

Ferner sind, wie nahezu alle Figuren zeigen, die Befestigungsrahmenteile 29, 30 gleichorientiert, insbesondere parallel, zueinander ausgerichtet.

An jedem Befestigungsrahmenteil 27, 28 ist, wie bereits mehrfach erwähnt, ein Ski A, B und eine Fußaufnahmevorrichtung 55 und eine dritte oder vierte Komponente 37, 38 der Parallelogrammführung 34 befestigbar, sodass für jeden Fuß eines Nutzers ein Ski A, B zur Verfügung steht.

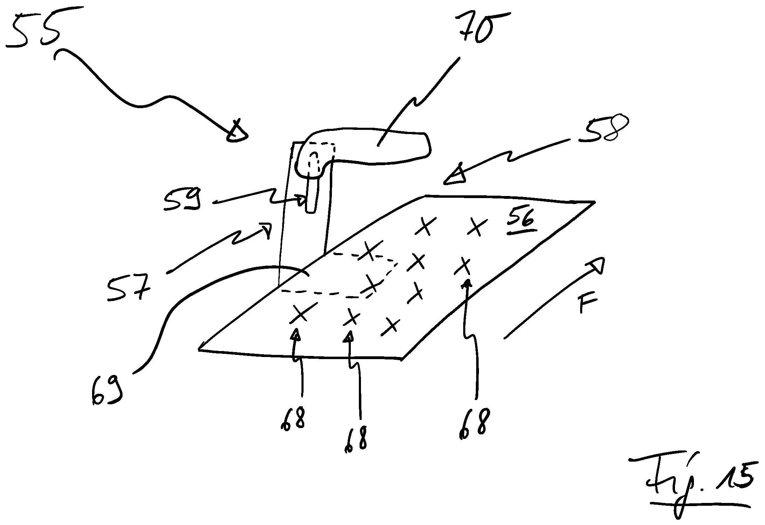

Auch hat, wie nur Figur 15, welche eine schematische räumliche Ansicht auf eine Fußaufnahmevorrichtung 55 darstellt, zeigt, die Stehvorrichtung 2 eine Fußaufnahmevorrichtung 55, welche einen Schuh eines Nutzers aufnimmt.

Hierbei weist die Fußaufnahmevorrichtung 55 ein Bodenteil 56 auf, das an einem Verbindungsbauteil 31 des entsprechenden Befestigungsrahmenteils 27, 28 befestigt ist und auf welchem die Sohle eines Schuhs eines Nutzers platzierbar ist.

Das Bodenteil 56 ist als Platte und mit Erhebungen 68 ausgebildet, um die Reibung zwischen der Sohle eines Schuhs und dem Bodenteil 56 zu erhöhen.

Ferner hat die Fußaufnahmevorrichtung 55 eine Halteeinrichtung 57, die an einem Verbindungsbauteil 31 des entsprechenden Befestigungsrahmenteils 27, 28 befestigt ist und welche ein Entfernen eines Schuhs eines Nutzers durch eine Öffnung 58 zwischen der Halteeinrichtung 57 und dem Bodenteil 56 der Fußaufnahmevorrichtung 55 zumindest teilweise unterbindet.

Die Halteeinrichtung 57 ist, wie Figur 15 zeigt, U-Profil-förmig ausgebildet, wobei einer der beiden gegenüberliegenden Flansche 69 der U-Profil-förmig ausgebildeten Halteeinrichtung 57 an dem Bodenteil 56 der Fußaufnahmevorrichtung 55 und/oder an dem Verbindungsbauteil 31 des entsprechenden Befestigungsrahmenteils 27, 28 befestigt ist.

Die Halteeinrichtung 57 hat eine Führung 59, entlang welcher einer der beiden gegenüberliegenden Flansche 70 der U-Profil-förmig ausgebildeten Halteeinrichtung 57 verschiebbar angeordnet ist, um die Entfernung zwischen dem Flansch 70 und dem Bodenteil 56 und/oder die Position (hinsichtlich der Neigung des Flansches 70) in Fahrtrichtung F auf die Größe und Form eines Schuhs eines Nutzers anzupassen.

Wie Figuren 1, 3 und 6, 9 und 14 zeigen, ist das Ski-Wintersportgerät 1 so ausgebildet, dass die Rahmenvorrichtung 3 und die Haltevorrichtung 4 zusammen im Betriebszustand eine auf dem Kopf stehende V-förmige Anordnung aufweisen.

Auch sind im Betriebszustand die Rahmenvorrichtung 3 und die Haltevorrichtung 4 um eine horizontal liegende Achse G3, die quer zur Fahrtrichtung F ausgerichtet ist, rotationsstarr zueinander ausgebildet.

Des Weiteren ist das Ski-Wintersportgerät 1 so ausgebildet, dass die Rahmenvorrichtung 3 und die Haltevorrichtung 4 nach dem werkzeuglosen und zerstörungsfreien Lösen einer Schnellverbindungseinrichtung 67C einer zweiten Verbindungsvorrichtung 60 drehbar miteinander verbunden bleiben, sodass durch Bewegen der Haltevorrichtung 4 relativ zur Rahmenvorrichtung 3 das Ski-Wintersportgerät 1 vom Betriebszustand in den Transportzustand und umgekehrt überführbar ist (vgl. Figuren 3 bis 8).

Auch ist das Ski-Wintersportgerät 1 so ausgebildet, dass die Rahmenvorrichtung 3 und die Haltevorrichtung 4 nach dem werkzeuglosen und lösbaren Installieren einer Schnellverbindungseinrichtung 67C einer zweiten Verbindungsvorrichtung 60 rotationsstarr miteinander verbunden sind, sodass ein Überführen vom Betriebszustand in den Transportzustand und umgekehrt durch Bewegen der Rahmenvorrichtung 3 relativ zur Haltevorrichtung 4 nicht möglich ist.

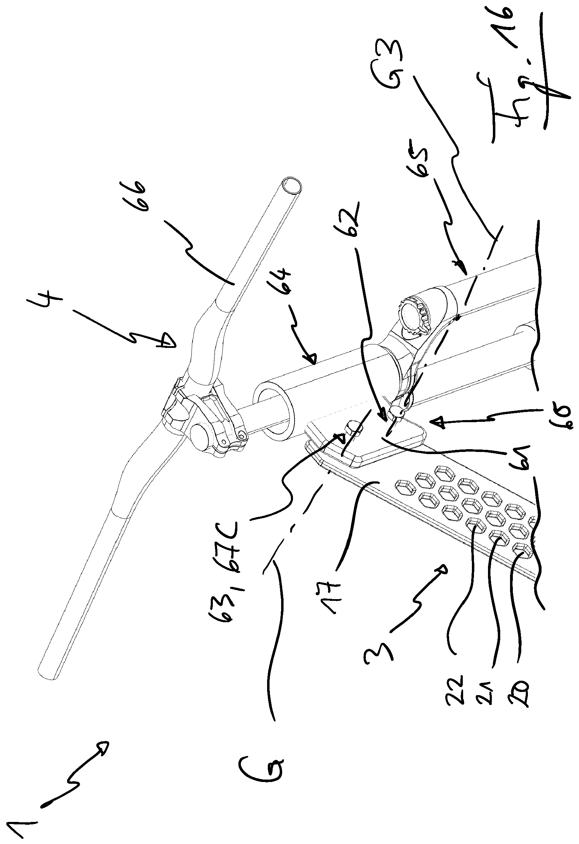

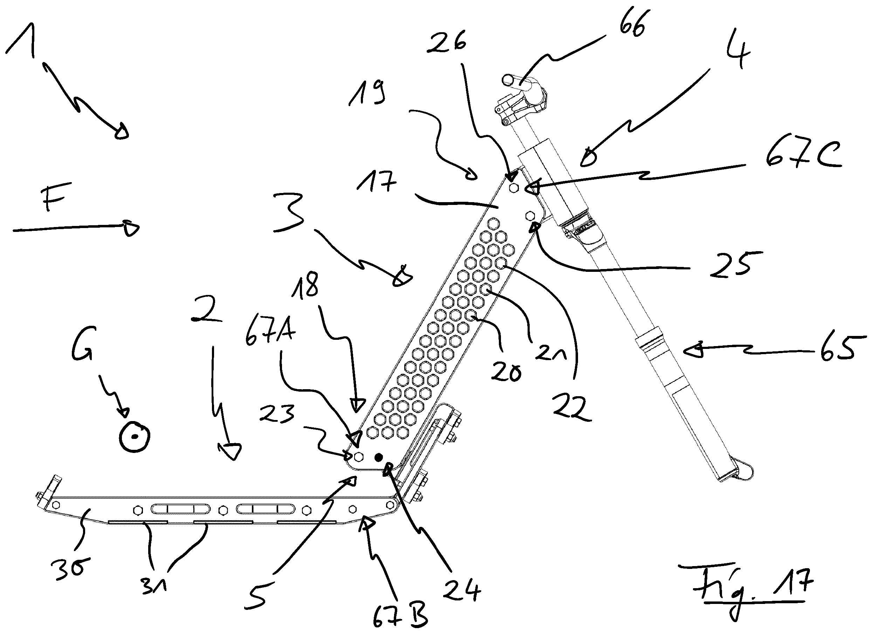

Figur 16 zeigt eine vergrößerte, räumliche Ansicht auf das Ski-Wintersportgerät aus Fig. 1, wobei in Figur 17 eine Seitenansicht auf das Ski-Wintersportgerät 1 aus Figur 1 in einem Betriebszustand, identisch zu Figur 3, dargestellt ist.

Der Einfachheit und Kürze halber werden die beiden Figuren 16 und 17 nachfolgend gemeinsam beschrieben.

So zeigen genannte Figuren die Rahmenvorrichtung 3 des Ski-Wintersportgeräts 1, wie bereits beschrieben, die der Verbindung mit der Haltevorrichtung 4 und mit der Stehvorrichtung 2 eines Ski-Wintersportgeräts 1 dient.

Hierbei hat die Rahmenvorrichtung 3 das Rahmenbauteil 17 mit einem ersten und einem zweiten Ende 18, 19, wobei am ersten Ende 18 die Stehvorrichtung 2 und am zweiten Ende 19 die Haltevorrichtung 4 angeordnet ist.

Das Rahmenbauteil 17 hat mehrere Aussparungen 20, 21, 22 als Leichtbaumaßnahme und ist aus einem Blech gebildet, dessen Breite und Länge sehr viel größer sind als dessen Dicke. Jedes Rahmenbauteil 17 ist mittels eines Stanzverfahrens, eines Laserschneidverfahrens, eines Fräsverfahrens und/oder Schneidverfahrens erstellt worden.

Die Aussparungen 20, 21, 22 haben eine eckige Form und sind in Form einer Bienenwabenstruktur ausgebildet.

Das erste Ende 18 hat eine Drehstelle 23, an welcher die erste Verbindungsvorrichtung 5 des Ski-Wintersportgeräts 1 drehbar befestigt ist und welche zu einem Drehgelenk ausbildbar ist.

An dieser Drehstelle 23 ist das Rahmenbauteil 17 mit der ersten Drehstelle 7 der ersten Verbindungselemente 6 der ersten Verbindungsvorrichtung 5 drehbar verbunden, um ein Drehgelenk zu bilden.

Ferner hat das Rahmenbauteil 17 am ersten Ende 18 eine erste Verbindungsstelle 24 zur ersten Verbindungsvorrichtung 5, um mithilfe einer werkzeuglosen, zerstörungsfrei lösbar befestigbaren Schnellverbindungseinrichtung 67A die relative Bewegung von Rahmenvorrichtung 3 und den ersten Verbindungselementen 6 der ersten Verbindungsvorrichtung 5 um die Drehstelle 23 zu unterbinden.

Das zweite Ende 19 hat ebenfalls eine Rotationsstelle 25, an welcher die Haltevorrichtung 4 des Ski-Wintersportgeräts 1 drehbar befestigt ist.

Das Rahmenbauteil 17 hat ferner am zweiten Ende 19 eine zweite Verbindungsstelle 26 zur Haltevorrichtung 4, um mithilfe einer werkzeuglosen, zerstörungsfrei lösbar befestigbaren Schnellverbindungseinrichtung 67C die relative Bewegung von Rahmenvorrichtung 3 und Haltevorrichtung 4 um die Rotationsstelle 25 zu unterbinden,
Dabei sind die Rotationsstelle 25 und die zweite Verbindungsstelle 26 voneinander beabstandet, wobei die zweite Verbindungsstelle 26 auf eine werkzeuglose, zerstörungsfrei lösbar befestigbare Schnellverbindungseinrichtung 67C hinsichtlich Form und Passung, insbesondere ausgebildet als Spiel- oder Übergangspassung, angepasst ist.

Wie in z. B. Figuren 6 bis 8 zu erkennen, hat - genau genommen - die Rahmenvorrichtung 3 zwei Rahmenbauteile 17, die voneinander beabstandet sind, um dazwischen ein drittes Verbindungselement 61 (vgl. Figur 16) zur Verbindung mit der Haltevorrichtung 4 und der ersten Verbindungsvorrichtung 5, die die Rahmenvorrichtung 3 mit der Stehvorrichtung 2 relativ bewegbar zueinander verbindet, aufzunehmen.

Wie bereits angedeutet, hat das Ski-Wintersportgerät 1 eine zweite Verbindungsvorrichtung 60 zum Befestigen der Haltevorrichtung 4 an der Rahmenvorrichtung 3.

Die zweite Verbindungsvorrichtung 60 ist ausgebildet, ein Verschwenken der Rahmenvorrichtung 3 und der Haltevorrichtung 4 schnell zu gestatten und schnell zu unterbinden.

Die zweite Verbindungsvorrichtung 60 umfasst das dritte Verbindungselement 61 zur Verbindung der Rahmenvorrichtung 3 mit der Haltevorrichtung 4, wobei das dritte Verbindungselement 61 zwischen zwei Rahmenbauteilen 17 der Rahmenvorrichtung 3 angeordnet ist (vgl. Figuren 16 und 6 bis 8).

Das dritte Verbindungselement 61 ist zudem gelenkig an der Rahmenvorrichtung 3 angeordnet.

Auch hat das dritte Verbindungselement 61 eine Drehstelle 62, insbesondere ausgebildet als Durchführung, um welche die Haltevorrichtung 4, insbesondere im Transportzustand, drehbar zur Rahmenvorrichtung 3 befestigt ist.

Die Drehstelle 62 ist für einen Bolzen oder eine Schraube ausgebildet, wobei die Drehstelle 62 und die Rotationsstelle 25 des zweiten Endes 19 der Rahmenbauteile 17 der Rahmenvorrichtung 3 ein Drehgelenk bilden.

Des Weiteren zeigt insbesondere Figur 16, dass das dritte Verbindungselement 61 eine Schnellverbindungsstelle 63, insbesondere ausgebildet als Durchführung und/oder ausbildbar zum Drehgelenk, umfasst, um mithilfe der werkzeuglosen, zerstörungsfrei lösbar befestigbaren Schnellverbindungseinrichtung 67C die relative Drehbewegung von Haltevorrichtung 4 zur Rahmenvorrichtung 3 um die Drehstelle 62 zu unterbinden.

Die Schnellverbindungsstelle 63 und die zweite Verbindungsstelle 26 am zweiten Ende 19 des Rahmenbauteils 17 bilden zusammen mit der Drehstelle 62 und der Rotationsstelle 25 ein sperr- und freigebbares Drehgelenk.

Dabei ist die Schnellverbindungsstelle 63 auf eine werkzeuglose, zerstörungsfrei lösbar befestigbare Schnellverbindungseinrichtung 67C hinsichtlich Form und Passung, insbesondere ausgebildet als Spiel- oder Übergangspassung, angepasst.

Ferner sind die Drehstelle 62 und die Schnellverbindungsstelle 63 voneinander beabstandet, sodass eine relative Drehung von der Haltevorrichtung 4 und der Rahmenvorrichtung 3 unterbindbar ist.

Im Betriebszustand sind die Rahmenvorrichtung 3 und das dritte Verbindungselement 61 form- und/oder kraftschlüssig, insbesondere mithilfe der Schnellverbindungseinrichtung 67C, verbunden.

Wie insbesondere Figuren 16 und 17 zeigen, hat die Haltevorrichtung 4 ein Steuerrohrelement 64 zur Aufnahme eines Gabelschaftrohrs einer Lenkgabel 65.

Das Steuerrohrelement 64 gestattet eine relative Drehung von Gabelschaftrohr und Rahmenvorrichtung 2, um mithilfe einer Drehung der Lenkgabel 65 eine Richtungsänderung für einen Ski C an der Haltevorrichtung 4 zu erzielen.

Ferner hat die Haltevorrichtung 4 zum Festhalten - wie gerade erwähnt - eine Lenkstange 66 und eine Lenkgabel 65, insbesondere eine Fahrradgabel.

Die Haltevorrichtung 4 und die Rahmenvorrichtung 3 sind so ausgebildet, dass die Lenkstange 66 relativ zur Rahmenvorrichtung 3 drehbar ist, sodass die Richtung eines Ski C an der Haltevorrichtung 2 in seiner Richtung veränderbar ist.

Wie bereits mehrfach erwähnt, weist das Ski-Wintersportgerät 1 mehrere Schnellverbindungseinrichtungen 67A, 67B, 67C zum werkzeuglosen, zerstörungsfreien und lösbaren Befestigen von Vorrichtungen und/oder Elementen auf und ist ausgebildet, die Haltevorrichtung 4 von der Rahmenvorrichtung 3 und die Stehvorrichtung 2 von der Rahmenvorrichtung 3 und die Parallelogrammführung 34 von den Befestigungsrahmenteilen 27, 28 schnell und zerstörungsfrei zu lösen sowie schnell zu verbinden, um das Ski-Wintersportgerät 1 vom Transportzustand in den Betriebszustand oder umgekehrt zu überführen.

Dabei ist die Schnellverbindungseinrichtung 67A ausgebildet, werkzeuglos, zerstörungsfrei und lösbar befestigbar die ersten Verbindungselemente 6 der ersten Verbindungsvorrichtung 5 mit der Rahmenvorrichtung 3 zu verbinden, wohingegen die Schnellverbindungseinrichtung 67C ausgebildet ist, werkzeuglos, zerstörungsfrei und lösbar befestigbar die Rahmenvorrichtung 3, insbesondere deren Rahmenbauteile 17, mit einem dritten Verbindungselement 61 der zweiten Verbindungsvorrichtung 60 zu verbinden.

Zudem ist die Schnellverbindungseinrichtung 67B ausgebildet ist, werkzeuglos, zerstörungsfrei und lösbar befestigbar die dritte und vierte Komponente 37, 38 der Parallelogrammführung 34 mit den Befestigungsrahmenteilen 27, 28 zu verbinden.

Zwar nicht aus den Figuren zu erkennen, sind die Schnellverbindungseinrichtungen 67A, 67B, 67C als Steckbolzen, insbesondere als Steckbolzen mit einer Sicherung gegen Herausziehen, ausgebildet.

Dabei weisen die als Steckbolzen ausgebildeten Schnellverbindungseinrichtungen 67A, 67B, 67C an ihrem ersten Ende eine Bohrung für einen Splint, insbesondere für einen Klapp- oder Federsplint, quer zu dessen Achsrichtung auf. An ihrem zweiten Ende haben sie ein Griffteil zum Greifen und Führen.

Alternativ ist es möglich, dass alle drei Schnellverbindungseinrichtungen 67A, 67B, 67C unterschiedlich ausgebildet sind.

So kann z. B. jede Schnellverbindungseinrichtung 67A, 67B, 67C auch einen Schnappverschluss aufweisen, der ähnlich einem Karabiner ausgebildet ist, welcher ein Steckelement aufnimmt bzw. sichert, das eine Form ähnlich einer Schraube aufweist und das an einer Vorrichtung oder an einem Element ausgebildet ist.

Auch kann jede Schnellverbindungseinrichtung 67A, 67B, 67C als Spannverschluss ausgebildet sein, der einen Bügel und einen Spannhebel umfasst, wobei der Spannverschluss eine Vorrichtung, ein Teil oder ein Element kraft- und/oder formschlüssig mit einer weiteren Vorrichtung, einem weiteren Teil oder einem weiteren Element verbindet.

In der Regel weisen jede Schnellverbindungseinrichtung 67A, 67B, 67C und die Verbindungs- und Schnellverbindungsstellen eine Passung, insbesondere eine Spiel- oder Übergangspassung, auf.

Abschließend sei noch angemerkt, dass eine Drehstelle und/oder Rotationsstelle als Durchführung ausgebildet ist, wobei das von diesen gebildete Drehgelenk sperrbar und/oder freigebbar ausgebildet ist.

Das Drehgelenk oder das von einer Drehstelle und/oder Rotationsstelle gebildete Drehgelenk, bei der ein Bauteil gegenüber einem anderen Bauteil relativ drehbar ist, ist als Gleitlager ausgebildet. Dieses scheint am besten für Temperaturen um den Gefrierpunkt geeignet.

Zusammenfassend kann für die Figuren 1 bis 17 festgehalten werden, dass im Transportzustand die Gesamtlänge GL des Ski-Wintersportgeräts 1 um wenigstens 30 % geringer ist als im Betriebszustand ist.

Auch wird die Gesamtlänge GL des Ski-Wintersportgeräts 1 im Betriebszustand und in Fahrtrichtung F gesehen von der Entfernung von dem vordersten Ende der Haltevorrichtung 4 mit Lenkgabel 65 zum hintersten Ende der Stehvorrichtung 2, insbesondere zum hinteren Ende der Befestigungsrahmenteile 27, 28 gebildet.

Im Transportzustand hingegen wird die Gesamtlänge GL des Ski-Wintersportgeräts 1 und in Fahrtrichtung F gesehen von der Entfernung von dem oberen Ende 15 des Neigeteils 14 der Stehvorrichtung 2 zum hintersten Ende der Stehvorrichtung 2, insbesondere zum hinteren Ende der Befestigungsrahmenteile 27, 28 gebildet.

Ferner ist in den Figuren 1 bis 17 gezeigt, dass im Transportzustand die Gesamthöhe GH des Ski-Wintersportgeräts 1 um wenigstens 30 % geringer ist als im Betriebszustand.

Die Gesamthöhe GH des Ski-Wintersportgeräts 1 wird im Betriebszustand quer zur Fahrtrichtung F gesehen von der Entfernung von dem höchsten Ende der Haltevorrichtung 4 zu den Befestigungsrahmenteilen 27, 28 gebildet.

Im Transportzustand wird die Gesamthöhe des Ski-Wintersportgeräts 1 quer zur Fahrtrichtung F gesehen von der Entfernung von dem höchsten Ende der Haltevorrichtung 4 zu den Befestigungsrahmenteilen 27, 28 gebildet.

Ferner sei noch erwähnt, dass die Rahmenvorrichtung 3 eine Tragevorrichtung zum Tragen per Hand und/oder zum Einhängen an einer Sitzfläche eines Skilifts aufweisen kann (nicht dargestellt).

So zeigen also die Figuren 1 bis 17 ein Ski-Wintersportgerät 1, an dem drei Skier A, B, C anordenbar sind, wobei die drei Skier A, B, C relativ zueinander ähnlich den Rädern eines Dreirads anordenbar sind und der Ski C der Haltevorrichtung 4 in Fahrtrichtung F vor den zwei Skiern A, B der Stehvorrichtung 2 anordenbar ist.

Der Ski C der Haltevorrichtung 4 ist, quer zur Fahrtrichtung F des Ski-Wintersportgeräts 1 gesehen, zwischen zwei Skiern A, B der Stehvorrichtung 2 anordenbar, wobei das erste Befestigungsrahmenteil 27 und das zweite Befestigungsrahmenteil 28 und somit die zwei Ski A, B hüftbreit nebeneinander angeordnet sind.

**Bezugszeichenliste**

| | | | |
|---|---|---|---|
| 1 | Ski-Wintersportgerät | 32 | Rotationsstelle |
| 2 | Stehvorrichtung | 33 | Schnellverbindungsstelle |
| 3 | Rahmenvorrichtung | 34 | Parallelogrammführung |
| 4 | Haltevorrichtung | 35 | erste Komponente |
| 5 | erste Verbindungsvorrichtung | 36 | zweite Komponente |
| 6 | erstes Verbindungselement | 37 | dritte Komponente |
| 7 | erste Drehstelle | 38 | vierte Komponente |
| 8 | zweite Drehstelle | 39 | Drehgelenk |
| 9 | Verbindungsstelle | 40 | Drehgelenk |
| 10 | zweites Verbindungselement | 41 | Drehgelenk |
| 11 | Drehstelle | 42 | Drehgelenk |
| 12 | erster Anschlag | 43 | Drehgelenk |
| 13 | zweiter Anschlag | 44 | Drehgelenk |
| 14 | Neigeteil | 45 | Rotationsstelle |
| 15 | oberes Ende | 46 | Schnellverbindungsstelle |
| 16 | unteres Ende | 47 | fünfte Komponente |
| 17 | Rahmenbauteil | 48 | Drehstelle |
| 18 | ersten Ende | 49 | Drehstelle |
| 19 | zweiten Ende | 50 | Drehstelle |
| 20 | Aussparung | 51 | Verbindungseinrichtung |
| 21 | Aussparung | 52 | Energiespeicher |
| 22 | Aussparung | 53 | erstes Ende |
| 23 | Drehstelle | 54 | zweites Ende |
| 24 | erste Verbindungsstelle | 55 | Fußaufnahmevorrichtung |
| 25 | Rotationsstelle | 56 | Bodenteil |
| 26 | zweite Verbindungsstelle | 57 | Halteeinrichtung |
| 27 | erstes Befestigungsrahmenteil | 58 | Öffnung |
| 28 | zweites Befestigungsrahmenteil | 59 | Führung |
| 29 | Rahmenelement | 60 | zweite Verbindungsvorrichtung |
| 30 | Rahmenelement | 61 | drittes Verbindungselement |
| 31 | Verbindungsbauteil | 62 | Drehstelle |
| 63 | Schnellverbindungsstelle | K | kurzer Schenkel |
| 64 | Steuerrohrelement | | |
| 65 | Lenkgabel | F | Fahrtrichtung |
| 66 | Lenkstange | G | horizontal liegende Achse |
| 67A | Schnellverbindungseinrichtung der ersten Verbindungsvorrichtung | G1 | horizontal liegende Achse |
| | | G2 | horizontal liegende Achse |
| | | G3 | horizontal liegende Achse |
| 67B | Schnellverbindungseinrichtung | G4 | horizontal liegende Achse |
| 67C | Schnellverbindungseinrichtung der zweiten Verbindungsvorrichtung | H | Drehachse |
| | | S1 | erster Schenkel |
| 68 | Erhebung | S2 | zweiter Schenkel |
| 69 | Flansch | | |
| 70 | Flansch | RV | Raumvolumen |
| | | GL | Gesamtlänge |
| A | Ski | GH | Gesamthöhe |
| B | Ski | | |
| C | Ski | H | Höhe |
| | | L | Länge |
| L | langer Schenkel | T | Tiefe |

## Patentansprüche

1. Ski-Wintersportgerät (1) zum Hangabwärts-Gleiten mit drei anordenbaren Skiern (A, B, C) aufweisend:
- eine Stehvorrichtung (2), auf welcher ein Nutzer stehen kann,
- wobei an der Stehvorrichtung (2) zwei Skier (A, B) anordenbar sind, die in Fahrtrichtung (F) nebeneinander anordenbar sind, sodass für jeden Fuß eines Nutzers ein Ski (A, B) zur Verfügung steht, und
- eine Rahmenvorrichtung (3) zum Verbinden der Stehvorrichtung (2) mit einer Haltevorrichtung (4) zum Festhalten per Hand,
- wobei die Rahmenvorrichtung (3) und die Stehvorrichtung (2) relativ bewegbar miteinander verbunden sind, und
- wobei die Rahmenvorrichtung (3) und die Stehvorrichtung (2) zueinander klappbar ausgebildet sind, sodass das benötigte Raumvolumen (RV) des Ski-Wintersportgeräts (1) reduzierbar ist,
**dadurch gekennzeichnet, dass**
- in einem Betriebszustand, in welchem das Ski-Wintersportgerät (1) zum Hangabwärts-Gleiten einsatzbereit ist, die relative Bewegung der Rahmenvorrichtung (3) und der Stehvorrichtung (2) so zueinander eingeschränkt ist, dass diese in einem eingeschränkten Bereich oder in einem eingeschränkten Winkelbereich relativ zueinander bewegbar sind und somit ein sicheres Gleiten hangabwärts gewährleisten, und dass
- in einem Transportzustand, in welchem das Ski-Wintersportgerät (1) zum Einsatzort transportierbar ist, die relative Bewegung der Rahmenvorrichtung (3) und der Stehvorrichtung (2) so vergrößert ist, dass diese über einen eingeschränkten Bereich oder einen eingeschränkten Winkelbereich hinaus relativ zueinander bewegbar sind und somit das Raumvolumen (RV) des Ski-Wintersportgeräts (1) im Vergleich zum Betriebszustand reduzierbar ist.

2. Ski-Wintersportgerät nach Anspruch 1,
- wobei das Ski-Wintersportgerät (1) ausgebildet ist, vom Transportzustand in den Betriebszustand und umgekehrt überführt oder werkzeuglos überführt zu werden,
- wobei im Transportzustand das Ski-Wintersportgerät (1) zum Einsatzort transportierbar und im Betriebszustand zum Hangabwärts-Gleiten einsatzbereit ist, und/oder
- wobei das Ski-Wintersportgerät (1) im Betriebszustand ein im Vergleich zum Transportzustand größeres Raumvolumen (RV) aufweist.

3. Ski-Wintersportgerät nach Anspruch 1 oder 2,
- wobei im Transportzustand die Rahmenvorrichtung (3) und die Stehvorrichtung (2), ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegbar sind, und/oder
- wobei im Betriebszustand die Rahmenvorrichtung (3) in einem eingeschränkten Winkelbereich relativ bewegbar zur Stehvorrichtung (2) ausgebildet ist, sodass Unebenheiten der Skipiste beim Hangabwärts-Gleiten von der relativen Bewegung der Rahmenvorrichtung (3) und der Stehvorrichtung (2) im Rahmen des eingeschränkten Winkelbereichs kompensierbar sind.

4. Ski-Wintersportgerät nach einem der vorangehenden Ansprüche,
- wobei das Ski-Wintersportgerät (1) so ausgebildet ist, dass die Rahmenvorrichtung (3) und die Stehvorrichtung (2) nach dem werkzeuglosen, und zerstörungsfreien Lösen einer Schnellverbindungseinrichtung (67A) einer ersten Verbindungsvorrichtung (5) über einen eingeschränkten Winkelbereich hinaus drehbar miteinander verbunden bleiben, sodass das Ski-Wintersportgerät (1) durch Bewegen der Rahmenvorrichtung (3) relativ zur Stehvorrichtung (2) vom Betriebszustand in den Transportzustand und umgekehrt überführbar ist,
und/oder
- wobei das Ski-Wintersportgerät (1) so ausgebildet ist, dass die Rahmenvorrichtung (3) und die Stehvorrichtung (2) nach dem werkzeuglosen und lösbaren Installieren einer Schnellverbindungseinrichtung (67A) einer ersten Verbindungsvorrichtung (5) in einem eingeschränkten Winkelbereich drehbar miteinander verbunden sind, sodass durch Bewegen der Rahmenvorrichtung (3) relativ zur Stehvorrichtung (2) Unebenheiten der Skipiste beim Hangabwärts-Gleiten von der relativen Bewegung der Rahmenvorrichtung (3) und der Stehvorrichtung (2) im Rahmen des eingeschränkten Winkelbereichs kompensierbar sind, wobei ein Überführen vom Betriebszustand in den Transportzustand und umgekehrt durch Bewegen der Rahmenvorrichtung (3) relativ zur Stehvorrichtung (2) nicht möglich ist.

5. Ski-Wintersportgerät (1) nach einem der vorangehenden Ansprüche,
- wobei das Ski-Wintersportgerät (1) eine Haltevorrichtung (4) zum Festhalten per Hand aufweist,
- wobei an der Haltevorrichtung (4) ein Ski (C) anordenbar ist, und
- wobei die Rahmenvorrichtung (3) und die Haltevorrichtung (4) zueinander klappbar ausgebildet sind, sodass das benötigte Raumvolumen (RV) des Ski-Wintersportgeräts (1) reduzierbar ist.

6. Ski-Wintersportgerät nach einem der vorangehenden Ansprüche,
- wobei das Ski-Wintersportgerät (1) um wenigstens eine Achse (G) klappbar ist, welche senkrecht zur Fahrtrichtung (F) des Ski-Wintersportgeräts (1) orientiert ist, und/oder
- wobei die Rahmenvorrichtung (3) und die Stehvorrichtung (2) um wenigstens eine horizontal liegende Achse (G) klappbar und/oder bewegbar sind, die quer zur Fahrtrichtung (F) ausgerichtet ist, und/oder
- wobei die Rahmenvorrichtung (3) und die Haltevorrichtung (4) um wenigstens eine horizontal liegende Achse (G) klappbar und/oder bewegbar sind, die quer zur Fahrtrichtung (F) ausgerichtet ist.

7. Ski-Wintersportgerät nach einem der vorangehenden Ansprüche,
- wobei im Transportzustand die Rahmenvorrichtung (3) und die Haltevorrichtung (4), ähnlich wie drehbar miteinander verbundene Hebel einer schließenden Schere oder ähnlich einem klappbaren Messer eines Taschenmessers, aufeinander zu bewegbar und/oder, ähnlich wie drehbar miteinander verbundene Hebel einer öffnenden Schere oder ähnlich einem klappbaren Messer eines Taschenmessers, voneinander weg bewegbar sind,
und/oder
- wobei im Betriebszustand die Rahmenvorrichtung (3) und die Haltevorrichtung (4) um eine horizontal liegende Achse (G), die quer zur Fahrtrichtung (F) ausgerichtet ist, rotationsstarr zueinander ausgebildet sind.

8. Ski-Wintersportgerät nach einem der vorangehenden Ansprüche,
- wobei das Ski-Wintersportgerät (1) eine erste Verbindungsvorrichtung (5) aufweist, die die Rahmenvorrichtung (3) mit der Stehvorrichtung (2) relativ bewegbar zueinander verbindet,
- wobei die erste Verbindungsvorrichtung (5) die Rahmenvorrichtung (3) und die Stehvorrichtung (2) gelenkig miteinander verbindet,
- wobei die erste Verbindungsvorrichtung (5) ausgebildet ist, im Betriebszustand, in welchem das Ski-Wintersportgerät (1) zum Hangabwärts-Gleiten einsatzbereit ist, die relative Bewegung der Rahmenvorrichtung (3) und der Stehvorrichtung (2) so zueinander einzuschränken, dass diese in einem eingeschränkten Bereich oder in einem eingeschränkten Winkelbereich relativ zueinander bewegbar sind und somit ein sicheres Gleiten hangabwärts gewährleisten, und
- wobei die erste Verbindungsvorrichtung (5) ausgebildet ist, im Transportzustand, in welchem das Ski-Wintersportgerät (1) zum Einsatzort transportierbar ist, die relative Bewegung der Rahmenvorrichtung (3) und der Stehvorrichtung (2) so zu vergrößern, dass durch Klappen der Rahmenvorrichtung (3) und der Stehvorrichtung (2) zueinander das Raumvolumen (RV) des Ski-Wintersportgeräts (1) im Vergleich zum Betriebszustand verkleinerbar ist.

9. Ski-Wintersportgerät nach einem der vorangehenden Ansprüche,
- wobei die Stehvorrichtung (2) ein erstes Befestigungsrahmenteil (27) und ein zweites Befestigungsrahmenteil (28) jeweils zur Anordnung einer Fußaufnahmevorrichtung (55) und/oder jeweils eines Skis (A, B) und eine Parallelogrammführung (34) aufweist, welche die Neigung der Befestigungsrahmenteile (27, 28) und somit optionaler, zugehöriger Skier (A, B) quer zu einer Fahrtrichtung (F) synchronisiert,
- wobei die Parallelogrammführung (34) ein Parallelkurbel-Getriebe oder ein Getriebe einer Viergelenkkette ist, dessen jeweils gegenüberliegende Glieder gleich lang sind,
- wobei die Parallelogrammführung (34) vier Komponenten (35, 36, 37, 38) umfasst,
- wobei die dritte Komponente (37) an dem ersten Befestigungsrahmenteil (27) angeordnet ist, und
- wobei eine vierte Komponente (38) an dem zweiten Befestigungsrahmenteil (28)angeordnet ist.

10. Ski-Wintersportgerät nach Anspruch 9,
- wobei die Parallelogrammführung (34) eine fünfte Komponente (47) umfasst, mit welcher die hinteren Enden, bezogen auf die Fahrtrichtung (F) des Ski-Wintersportgeräts (1), der zwei Befestigungsrahmenteile (27, 28) gelenkig miteinander verbunden sind, und
- wobei die Stehvorrichtung (2) eine Verbindungseinrichtung (51) aufweist, die die fünfte Komponente (47) der Parallelogrammführung (34) mit der Rahmenvorrichtung (3) und/oder mit der ersten Verbindungsvorrichtung (5) verbindet.

11. Ski-Wintersportgerät nach Anspruch 10,
- wobei die Verbindungseinrichtung (51) einen Energiespeicher (52) und/oder einen Energieumwandler aufweist, und/oder
- wobei die Verbindungseinrichtung (51) ein Feder- und/oder Dämpferelement aufweist.

12. Ski-Wintersportgerät nach einem der vorangehenden Ansprüche,
- wobei das Ski-Wintersportgerät (1) eine zweite Verbindungsvorrichtung (60) zum Befestigen der Haltevorrichtung (4) an der Rahmenvorrichtung (3) umfasst, und
- wobei die zweite Verbindungsvorrichtung (60) ausgebildet ist, ein Verschwenken der Rahmenvorrichtung (3) und der Haltevorrichtung (4) schnell zu gestatten und schnell zu unterbinden.

13. Ski-Wintersportgerät nach Anspruch 12,
- wobei die zweite Verbindungsvorrichtung (60) ein drittes Verbindungselement (61) zur Verbindung der Rahmenvorrichtung (3) mit der Haltevorrichtung (4) umfasst,
- wobei das dritte Verbindungselement (61) gelenkig an der Rahmenvorrichtung (3) angeordnet ist, und/oder
- wobei im Betriebszustand die Rahmenvorrichtung (3) und das dritte Verbindungselement (61) form- und/oder kraftschlüssig verbunden sind.

14. Ski-Wintersportgerät nach einem der vorangehenden Ansprüche,
- wobei das Ski-Wintersportgerät (1) wenigstens eine Schnellverbindungseinrichtung (67A, 67B, 67C) zum werkzeuglosen, zerstörungsfreien und lösbaren Befestigen von Vorrichtungen und/oder Elementen umfasst und ausgebildet ist, die Haltevorrichtung (4) von der Rahmenvorrichtung (3) und/oder die Stehvorrichtung (2) von der Rahmenvorrichtung (3) und/oder die Parallelogrammführung (34) von dem Befestigungsrahmenteil (27, 28) schnell und zerstörungsfrei zu lösen sowie schnell zu verbinden, um das Ski-Wintersportgerät (1) vom Transportzustand in den Betriebszustand oder umgekehrt zu überführen.

15. Ski-Wintersportgerät nach einem der vorangehenden Ansprüche in Kombination mit Anspruch 5,
- wobei die Haltevorrichtung (4) ein Steuerrohrelement (64) zur Aufnahme eines Gabelschaftrohrs einer Lenkgabel aufweist,
- wobei das Steuerrohrelement (64) eine relative Drehung von Gabelschaftrohr und Rahmenvorrichtung (2) gestattet, um mithilfe einer Drehung der Lenkgabel (65) eine Richtungsänderung für einen Ski (C) an der Haltevorrichtung (4) zu erzielen, und/oder
- wobei die Haltevorrichtung (4) zum Festhalten eine Lenkstange (66) und eine Lenkgabel (65) umfasst.

## Claims

1. Ski winter sports device (1) for sliding down a hill with three arrangeable skis (A, B, C), comprising:
- a standing device (2) on which a user can stand,
- wherein two skis (A, B) can be arranged on the standing device (2), which can be arranged next to each other in the direction of travel (F), so that one ski (A, B) is available for each foot of a user, and
- a frame device (3) for connecting the standing device (2) to a holding device (4) for holding by hand,
- wherein the frame device (3) and the standing device (2) are connected to one another in a relatively movable manner, and
- wherein the frame device (3) and the standing device (2) are configured to be foldable relative to one another, so that the required spatial volume (RV) of the ski winter sports device (1) can be reduced,
**characterized in that**
- in an operating state, in which the ski winter sports device (1) is ready for use for sliding down a hill, the relative movement of the frame device (3) and the standing device (2) relative to one another is limited such that they are movable relative to each other in a limited range or in a limited angular range and thus ensure safe sliding down a hill, and that
- in a transport state, in which the ski winter sports device (1) is transportable to the place of use, the relative movement of the frame device (3) and the standing device (2) is increased such that they are movable relative to each other beyond a limited range or a limited angular range and thus the spatial volume (RV) of the ski winter sports device (1) can be reduced compared to the operating state.

2. Ski winter sports device according to claim 1,
- wherein the ski winter sports device (1) is configured to be transferred from the transport state to the operating state and vice versa or to be transferred without tools,
- wherein in the transport state the ski winter sports device (1) can be transported to the place of use and in the operating state is ready for sliding down a hill, and/or
- wherein the ski winter sports device (1) in the operating state comprises a larger spatial volume (RV) compared to the transport state.

3. Ski winter sports device according to claim 1 or 2,
- wherein in the transport state the frame device (3) and the standing device (2) are movable toward each other, similar to rotatably interconnected levers of a closing pair of scissors or similar to a foldable blade of a pocketknife, and/or are movable away from each other, similar to rotatably interconnected levers of an opening pair of scissors or similar to a foldable blade of a pocketknife, and/or
- wherein, in the operating state, the frame device (3) is configured to be movable in a limited angular range relative to the standing device (2), so that an unevenness of a ski slope during down a hill can be compensated for by the relative movement of the frame device (3) and the standing device (2) within the limited angular range.

4. Ski winter sports device according to one of the preceding claims,
- wherein the ski winter sports device (1) is configured such that the frame device (3) and the standing device (2), after the toolless and non-destructive release of a quick connecting device (67A) of a first connection device (5), remain rotatably connected to each other beyond a limited angular range, so that the ski winter sports device (1) can be transferred from the operating state to the transport state and vice versa by moving the frame device (3) relative to the standing device (2),
and/or
- wherein the ski winter sports device (1) is configured such that the frame device (3) and the standing device (2), after the toolless and releasable installation of a quick connecting device (67A) of a first connection device (5), are rotatably connected to each other in a limited angular range, so that by moving the frame device (3) relative to the standing device (2), unevenness of the ski slope during sliding down a hill can be compensated for by the relative movement of the frame device (3) and the standing device (2) within the limited angular range, wherein transferring from the operating state to the transport state and vice versa is not possible by moving the frame device (3) relative to the standing device (2).

5. Ski winter sports device (1) according to one of the preceding claims,
- wherein the ski winter sports device (1) comprises a holding device (4) for holding by hand,
- wherein a ski (C) can be arranged on the holding device (4), and
- wherein the frame device (3) and the holding device (4) are configured to be foldable relative to each other, so that the required spatial volume (RV) of the ski winter sports device (1) can be reduced.

6. Ski winter sports device according to one of the preceding claims,
- wherein the ski winter sports device (1) is foldable about at least one axis (G) which is oriented perpendicular to the direction of travel (F) of the ski winter sports device (1), and/or
- wherein the frame device (3) and the standing device (2) are foldable and/or movable about at least one horizontally oriented axis (G) which is oriented transversely to the direction of travel (F), and/or
- wherein the frame device (3) and the holding device (4) are foldable and/or movable about at least one horizontally oriented axis (G) which is oriented transversely to the direction of travel (F).

7. Ski winter sports device according to one of the preceding claims,
- wherein in the transport state the frame device (3) and the holding device (4) can be moved towards each other, similar to rotatably interconnected levers of a closing pair of scissors or similar to a foldable blade of a pocketknife, and/or can be moved away from each other, similar to rotatably interconnected levers of an opening pair of scissors or similar to a foldable blade of a pocketknife,
and/or
- wherein in the operating state the frame device (3) and the holding device (4) are configured to be rotationally rigid relative to each other about a horizontally oriented axis (G) which is oriented transversely to the direction of travel (F).

8. Ski winter sports device according to one of the preceding claims,
- wherein the ski winter sports device (1) comprises a first connection device (5) which connects the frame device (3) to the standing device (2) relatively movable to each other,
- wherein the first connection device (5) articulately connects the frame device (3) and the standing device (2) to each other,
- wherein the first connection device (5) is configured, in the operating state in which the ski winter sports device (1) is ready for sliding down a hill, to limit the relative movement of the frame device (3) and the standing device (2) relative to each other in such a way that they are movable relative to each other in a limited range or in a limited angular range and thus ensure safe sliding down a hill, and
- wherein, in the transport state in which the ski winter sports device (1) can be transported to the place of use, the first connection device (5) is configured to increase the relative movement of the frame device (3) and the standing device (2) by folding the frame device (3) and the standing device (2) relative to each other the spatial volume (RV) of the ski winter sports device (1) can be reduced compared to the operating state.

9. Ski winter sports device according to one of the preceding claims,
- wherein the standing device (2) comprises a first fastening frame part (27) and a second fastening frame part (28) each for arranging a foot receiving device (55) and/or each for arranging a ski (A, B) and a parallelogram guide (34), which synchronizes the inclination of the fastening frame parts (27, 28) and thus optional associated skis (A, B) transversely to a direction of travel (F),
- wherein the parallelogram guide (34) is a parallel crank mechanism or a mechanism of a four-bar linkage, the respectively opposite links of which are of equal length,
- wherein the parallelogram guide (34) comprises four components (35, 36, 37, 38),
- wherein the third component (37) is arranged on the first fastening frame part (27), and
- wherein a fourth component (38) is arranged on the second fastening frame part (28).

10. Ski winter sports device according to claim 9,
- wherein the parallelogram guide (34) comprises a fifth component (47), with which the rear ends, in relation to the direction of travel (F) of the ski winter sports device (1), of the two fastening frame parts (27, 28) are articulately connected to each other, and
- wherein the standing device (2) comprises a connecting device (51) which connects the fifth component (47) of the parallelogram guide (34) to the frame device (3) and/or to the first connecting device (5).

11. Ski winter sports device according to claim 10,
- wherein the connecting device (51) comprises an energy storage (52) and/or an energy converter, and/or
- wherein the connecting device (51) comprises a spring and/or damper element.

12. Ski winter sports device according to one of the preceding claims,
- wherein the ski winter sports device (1) comprises a second connecting device (60) for fastening the holding device (4) to the frame device (3), and
- wherein the second connecting device (60) is configured to quickly permit and quickly prevent pivoting of the frame device (3) and the holding device (4).

13. Ski winter sports device according to claim 12,
- wherein the second connecting device (60) comprises a third connecting element (61) for connecting the frame device (3) to the holding device (4),
- wherein the third connecting element (61) is articulately arranged on the frame device (3), and/or
- wherein in the operating state the frame device (3) and the third connecting element (61) are connected in a form-fitting and/or force-fitting manner.

14. Ski winter sports device according to one of the preceding claims,
- wherein the ski winter sports device (1) comprises at least one quick connecting device (67A, 67B, 67C) for the toolless, non-destructive and releasable fastening of devices and/or elements and is configured to quickly and non-destructively release the holding device (4) from the frame device (3) and/or the standing device (2) from the frame device (3) and/or the parallelogram guide (34) from the fastening frame part (27, 28) and to quickly connect them, in order to transfer the ski winter sports device (1) from the transport state to the operating state or vice versa.

15. Ski winter sports device according to one of the preceding claims in combination with claim 5,
- wherein the holding device (4) comprises a head tube element (64) for receiving a steer tube of a steering fork,
- wherein the head tube element (64) permits a relative rotation of the fork steer tube and the frame device (2) in order to achieve a change in direction for a ski (C) on the holding device (4) by rotating of the steering fork (65), and/or
- wherein the holding device (4) comprises a handlebar (66) and a steering fork (65) for holding.

## Revendications

1. Appareil de ski et de sports d'hiver (1) pour glisser en pente descendante avec trois skis (A, B, C) pouvant être disposés, comprenant:
- un dispositif debout (2) sur lequel un utilisateur peut se tenir debout,
- deux skis (A, B) pouvant être disposés sur le dispositif debout (2), lesquels peuvent être disposés l'un à côté de l'autre dans la direction de déplacement (F) de sorte qu'un ski (A, B) soit disponible pour chaque pied d'un utilisateur, et
- un dispositif de cadre (3) pour relier le dispositif debout (2) à un dispositif de maintien (4) pour le maintien à la main,
- le dispositif de cadre (3) et le dispositif debout (2) étant reliés l'un à l'autre de manière relativement mobile, et
- le dispositif de cadre (3) et le dispositif debout (2) étant réalisés de manière rabattable l'un par rapport à l'autre de sorte que le volume d'espace (RV) requis de l'appareil de ski et de sports d'hiver (1) puisse être réduit,
**caractérisé en ce que**
- dans un état de fonctionnement, dans lequel l'appareil de ski et de sports d'hiver (1) est prêt à être utilisé pour glisser en pente descendante, le mouvement relatif du dispositif de cadre (3) et du dispositif debout (2) l'un par rapport à l'autre est limité de telle sorte que ceux-ci soient mobiles l'un par rapport à l'autre dans une zone limitée ou dans une zone angulaire limitée et garantissent ainsi un glissement sûr en pente descendante, et **en ce que**
- dans un état de transport, dans lequel l'appareil de ski et de sports d'hiver (1) peut être transporté vers le lieu d'utilisation, le mouvement relatif du dispositif de cadre (3) et du dispositif debout (2) est augmenté de telle sorte que ceux-ci soient mobiles l'un par rapport à l'autre au-delà d'une zone limitée ou d'une zone angulaire limitée et que le volume d'espace (RV) de l'appareil de ski et de sports d'hiver (1) puisse ainsi être réduit par rapport à l'état de fonctionnement.

2. Appareil de ski et de sports d'hiver selon la revendication 1,
- l'appareil de ski et de sports d'hiver (1) étant réalisé de manière à être transféré de l'état de transport à l'état de fonctionnement et inversement ou à être transféré sans outil,
- dans l'état de transport, l'appareil de ski et de sports d'hiver (1) pouvant être transporté vers le lieu d'utilisation et étant prêt à être utilisé pour glisser en pente descendante dans l'état de fonctionnement, et/ou
- dans l'état de fonctionnement, l'appareil de ski et de sports d'hiver (1) comprenant un volume d'espace (RV) plus grand par rapport à l'état de transport.

3. Appareil de ski et de sports d'hiver selon la revendication 1 ou 2,
- dans lequel, dans l'état de transport, le dispositif de cadre (3) et le dispositif debout (2), de manière similaire à des leviers reliés l'un à l'autre de manière rotative d'une cisaille de fermeture ou de manière similaire à un couteau rabattable d'un couteau de poche, pouvant être déplacés l'un vers l'autre et/ou, de manière similaire à des leviers reliés l'un à l'autre de manière rotative d'une cisaille d'ouverture ou de manière similaire à un couteau rabattable d'un couteau de poche, pouvant être éloignés l'un de l'autre, et/ou
- dans lequel, dans l'état de fonctionnement, le dispositif de cadre (3) étant réalisé de manière mobile dans une zone angulaire limitée par rapport au dispositif debout (2) de sorte que des irrégularités de la piste de ski lors du glissement en pente descendante puissent être compensées par le mouvement relatif du dispositif de cadre (3) et du dispositif debout (2) dans le cadre de la zone angulaire limitée.

4. Appareil de ski et de sports d'hiver selon l'une quelconque des revendications précédentes,
- l'appareil de ski et de sports d'hiver (1) étant réalisé de telle sorte que le dispositif de cadre (3) et le dispositif debout (2) restent reliés l'un à l'autre de manière rotative au-delà d'une zone angulaire limitée après le détachement sans outil et sans destruction d'un dispositif de liaison rapide (67A) d'un premier dispositif de liaison (5) de sorte que l'appareil de ski et de sports d'hiver (1) puisse être transféré de l'état de fonctionnement à l'état de transport et inversement par déplacement du dispositif de cadre (3) par rapport au dispositif debout (2),
et/ou
- l'appareil de ski et de sports d'hiver (1) étant réalisé de telle sorte que le dispositif de cadre (3) et le dispositif debout (2) soient reliés l'un à l'autre de manière rotative dans une zone angulaire limitée après l'installation sans outil et amovible d'un dispositif de liaison rapide (67A) d'un premier dispositif de liaison (5) de sorte que des irrégularités de la piste de ski lors du glissement en pente descendante puissent être compensées par le mouvement relatif du dispositif de cadre (3) et du dispositif debout (2) dans le cadre de la zone angulaire limitée par déplacement du dispositif de cadre (3) par rapport au dispositif debout (2), un transfert de l'état de fonctionnement à l'état de transport et inversement par déplacement du dispositif de cadre (3) par rapport au dispositif debout (2) n'étant pas possible.

5. Appareil de ski et de sports d'hiver (1) selon l'une quelconque des revendications précédentes,
- l'appareil de ski et de sports d'hiver (1) comprenant un dispositif de maintien (4) pour le maintien à la main,
- un ski (C) pouvant être disposé sur le dispositif de maintien (4), et
- le dispositif de cadre (3) et le dispositif de maintien (4) étant réalisés de manière rabattable l'un par rapport à l'autre de sorte que le volume d'espace (RV) requis de l'appareil de ski et de sports d'hiver (1) puisse être réduit.

6. Appareil de ski et de sports d'hiver selon l'une quelconque des revendications précédentes,
- l'appareil de ski et de sports d'hiver (1) pouvant être rabattu autour d'au moins un axe (G), lequel est orienté perpendiculairement à la direction de déplacement (F) de l'appareil de ski et de sports d'hiver (1), et/ou
- dans lequel le dispositif de cadre (3) et le dispositif debout (2) pouvant être rabattus et/ou déplacés autour d'au moins un axe (G) situé horizontalement, lequel est orienté transversalement à la direction de déplacement (F), et/ou
- dans lequel le dispositif de cadre (3) et le dispositif de maintien (4) pouvant être rabattus et/ou déplacés autour d'au moins un axe (G) situé horizontalement, lequel est orienté transversalement à la direction de déplacement (F).

7. Appareil de ski et de sports d'hiver selon l'une quelconque des revendications précédentes,
- dans lequel, dans l'état de transport, le dispositif de cadre (3) et le dispositif de maintien (4), de manière similaire à des leviers reliés l'un à l'autre de manière rotative d'une cisaille de fermeture ou de manière similaire à un couteau rabattable d'un couteau de poche, pouvant être déplacés l'un vers l'autre et/ou, de manière similaire à des leviers reliés l'un à l'autre de manière rotative d'une cisaille d'ouverture ou de manière similaire à un couteau rabattable d'un couteau de poche, pouvant être éloignés l'un de l'autre,
et/ou
- dans lequel, dans l'état de fonctionnement, le dispositif de cadre (3) et le dispositif de maintien (4) étant réalisés de manière rigide en rotation l'un par rapport à l'autre autour d'un axe (G) situé horizontalement, lequel est orienté transversalement à la direction de déplacement (F).

8. Appareil de ski et de sports d'hiver selon l'une quelconque des revendications précédentes,
- l'appareil de ski et de sports d'hiver (1) comprenant un premier dispositif de liaison (5) qui relie le dispositif de cadre (3) au dispositif debout (2) de manière mobile l'un par rapport à l'autre,
- dans lequel le premier dispositif de liaison (5) reliant de manière articulée le dispositif de cadre (3) et le dispositif debout (2) l'un à l'autre,
- le premier dispositif de liaison (5) étant réalisé de manière à limiter, dans l'état de fonctionnement, dans lequel l'appareil de ski et de sports d'hiver (1) est prêt à être utilisé pour glisser en pente descendante, le mouvement relatif du dispositif de cadre (3) et du dispositif debout (2) l'un par rapport à l'autre de telle sorte que ceux-ci soient mobiles l'un par rapport à l'autre dans une zone limitée ou dans une zone angulaire limitée et garantissent ainsi un glissement sûr en pente descendante, et
- le premier dispositif de liaison (5) étant réalisé de manière à augmenter, dans l'état de transport, dans lequel l'appareil de ski et de sports d'hiver (1) peut être transporté vers le lieu d'utilisation, le mouvement relatif du dispositif de cadre (3) et du dispositif debout (2) de telle sorte que le volume d'espace (RV) de l'appareil de ski et de sports d'hiver (1) puisse être réduit par rapport à l'état de fonctionnement par rabattement du dispositif de cadre (3) et du dispositif debout (2) l'un par rapport à l'autre.

9. Appareil de ski et de sports d'hiver selon l'une quelconque des revendications précédentes,
- dans lequel le dispositif debout (2) comprenant une première partie de cadre de fixation (27) et une deuxième partie de cadre de fixation (28) à chaque fois pour l'agencement d'un dispositif de réception de pied (55) et/ou à chaque fois d'un ski (A, B) et un guidage en parallélogramme (34) qui synchronise l'inclinaison des parties de cadre de fixation (27, 28) et ainsi des skis (A, B) associés facultatifs transversalement à une direction de déplacement (F),
- dans lequel le guidage en parallélogramme (34) étant un mécanisme à manivelle parallèle ou un mécanisme d'une chaîne à quatre articulations, dont les éléments à chaque fois opposés sont de même longueur,
- dans lequel le guidage en parallélogramme (34) comprenant quatre composants (35, 36, 37, 38),
- dans lequel le troisième composant (37) étant disposé sur la première partie de cadre de fixation (27), et
- dans lequel un quatrième composant (38) étant disposé sur la deuxième partie de cadre de fixation (28).

10. Appareil de ski et de sports d'hiver selon la revendication 9,
- dans lequel le guidage en parallélogramme (34) comprenant un cinquième composant (47), avec lequel les extrémités arrière, par rapport à la direction de déplacement (F) de l'appareil de ski et de sports d'hiver (1), des deux parties de cadre de fixation (27, 28) sont reliées l'une à l'autre de manière articulée, et
- dans lequel le dispositif debout (2) comprenant un dispositif de liaison (51) qui relie le cinquième composant (47) du guidage en parallélogramme (34) au dispositif de cadre (3) et/ou au premier dispositif de liaison (5).

11. Appareil de ski et de sports d'hiver selon la revendication 10,
- dans lequel le dispositif de liaison (51) comprenant un accumulateur d'énergie (52) et/ou un convertisseur d'énergie, et/ou
- dans lequel le dispositif de liaison (51) comprenant un élément à ressort et/ou amortisseur.

12. Appareil de ski et de sports d'hiver selon l'une quelconque des revendications précédentes,
- l'appareil de ski et de sports d'hiver (1) comprenant un deuxième dispositif de liaison (60) pour la fixation du dispositif de maintien (4) au dispositif de cadre (3), et
- dans lequel le deuxième dispositif de liaison (60) étant réalisé de manière à permettre et à empêcher rapidement un pivotement du dispositif de cadre (3) et du dispositif de maintien (4).

13. Appareil de ski et de sports d'hiver selon la revendication 12,
- dans lequel le deuxième dispositif de liaison (60) comprenant un troisième élément de liaison (61) pour la liaison du dispositif de cadre (3) au dispositif de maintien (4),
- dans lequel le troisième élément de liaison (61) étant disposé de manière articulée sur le dispositif de cadre (3), et/ou
- dans lequel, dans l'état de fonctionnement, le dispositif de cadre (3) et le troisième élément de liaison (61) étant reliés par engagement par correspondance de forme et/ou par force.

14. Appareil de ski et de sports d'hiver selon l'une quelconque des revendications précédentes,
- l'appareil de ski et de sports d'hiver (1) comprenant au moins un dispositif de liaison rapide (67A, 67B, 67C) pour la fixation sans outil, sans destruction et amovible de dispositifs et/ou d'éléments et étant réalisé de manière à détacher rapidement et sans destruction le dispositif de maintien (4) du dispositif de cadre (3) et/ou le dispositif debout (2) du dispositif de cadre (3) et/ou le guidage en parallélogramme (34) de la partie de cadre de fixation (27, 28) et à les relier rapidement afin de transférer l'appareil de ski et de sports d'hiver (1) de l'état de transport à l'état de fonctionnement ou inversement.

15. Appareil de ski et de sports d'hiver selon l'une quelconque des revendications précédentes en combinaison avec la revendication 5,
- dans lequel le dispositif de maintien (4) comprenant un élément de tube de direction (64) pour recevoir un tube de tige de fourche d'une fourche de direction,
- dans lequel l'élément de tube de direction (64) permettant une rotation relative du tube de tige de fourche et du dispositif de cadre (2) afin d'obtenir à l'aide d'une rotation de la fourche de direction (65) un changement de direction pour un ski (C) sur le dispositif de maintien (4), et/ou
- dans lequel le dispositif de maintien (4) comprenant pour le maintien une barre de direction (66) et une fourche de direction (65).
